# EUROPEAN PATENT APPLICATION

(11) **EP 4 382 546 A1**
(43) Date of publication of application: **12.06.2024**
(21) Application number: 22211944.8
(22) Date of filing: 07.12.2022
(51) Int. Cl.: C08G 18/24, C08G 18/32, C08G 18/76

(54) **POLY(UREA-URETHANE) POLYMER**

(71) Applicant: BASF SE, 67056 Ludwigshafen am Rhein (DE)
(72) Inventor: HAMMER, Larissa Maria, 67056 Ludwigshafen am Rhein (DE)
(74) Representative: Altmann Stößel Dick Patentanwälte PartG mbB

(57) **Abstract**

The present invention relates in a first aspect to a poly(urea-urethane) polymer, obtained or obtainable by reacting (i) at least one isocyanate; (ii) at least one compound comprising a hydroxyl group and a secondary amino group having a following formula (I).

A second aspect of the invention is directed to a method for preparing a poly(urea-urethane) polymer, preferably a poly(urea-urethane) polymer according to the first aspect of the invention. In a third aspect, the invention is directed to a process for (re)shaping a poly(urea-urethane) polymer, preferably a poly(urea-urethane) polymer according to the first aspect or a poly(urea-urethane) polymer obtainable or obtained by a method according to the second aspect. A fourth aspect of the invention is related to an article comprising the poly(urea-urethane) polymer according to the first aspect, or the poly(urea-urethane) polymer obtained or obtainable from the method of the second aspect. In a fifth aspect, the invention is directed to the use of the article of the fourth aspect or of the poly(urea-urethane) polymer according to the first aspect, or of the poly(urea-urethane) polymer obtained or obtainable from the method of the second aspect as a recyclable material.

## Description

The present invention relates in a first aspect to a poly(urea-urethane) polymer, obtained or obtainable by reacting (i) at least one isocyanate; (ii) at least one compound comprising a hydroxyl group and a secondary amino group having a following formula (I).

A second aspect of the invention is directed to a method for preparing a poly(urea-urethane) polymer, preferably a poly(urea-urethane) polymer according to the first aspect of the invention. In a third aspect, the invention is directed to a process for (re)shaping a poly(urea-urethane) polymer, preferably a poly(urea-urethane) polymer according to the first aspect or a poly(ureaurethane) polymer obtainable or obtained by a method according to the second aspect. A fourth aspect of the invention is related to an article comprising the poly(urea-urethane) polymer according to the first aspect, or the poly(urea-urethane) polymer obtained or obtainable from the method of the second aspect. In a fifth aspect, the invention is directed to the use of the article of the fourth aspect or of the poly(urea-urethane) polymer according to the first aspect, or of the poly(urea-urethane) polymer obtained or obtainable from the method of the second aspect as a recyclable material.

Polymer materials are usually classified into thermosets and thermoplastics, according to their thermal behavior. Thermoplastics can flow when heated, allowing multiple and easy processing, but are limited by their lower strength and structural stability at high temperatures, their tendency to abrasion, and their poor solvent resistance. Thermosets on the other hand have several advantageous characteristics such as they are dimensionally stable, thermally stable, creep resistant, chemically resistant and rigid. However, their main drawback is that they cannot be reshaped, reprocessed or recycled after complete curing, leading to both environmental and economic problems.

The different behavior is normally explained in that thermoplastics are made of covalently bonded molecule chains, wherein the chains are held together by weak interactions such as van der Waals forces. The weak intermolecular interactions result in an easy processing when melted or dissolved, but also make the polymer susceptible to solvents or creep under constant load. Thermoplastics can only be deformed reversibly above their glass-transition temperature or their crystalline melting point and are processed by, for example, extrusion or injection molding. Thermosets, on the other hand, are made of molecular chains, which are interconnected by covalent bonds to form a stable network. Due to the covalent bonds, no reshaping etc. is possible and a thermoset has to be prepared in the form it is intended to be used in.

A comparatively new class of polymeric materials are the so called vitrimers. The initial vitrimers prepared by Ludwik Leibler and coworkers had a network, which had both hydroxyl and ester groups, which were able to undergo exchange reactions (transesterifications) at high temperatures, resulting in the ability of stress relaxation and malleability of the material. On the other hand, the exchange reactions were suppressed to a great extent when the network was cooled down, leading to a behavior like a soft solid. This whole process was based only on exchange reactions, which was seen as the main difference with respect to the behavior of thermoplastics.

Generally, a vitrimer is understood as a polymeric material having a molecular covalently formed network, which can change its topology by thermally activated bond-exchange reactions. At high temperatures, a vitrimer can flow like a viscoelastic liquid, at low temperatures the bond-exchange reactions are immeasurably slow (frozen) and the vitrimer behaves like a classical thermoset at this point. The vitrimeric behavior opened new opportunities in the application of thermosets like use as a self-healing material or simple processibility in a wide temperature range. Since then, several different polymeric materials have been developed for vitrimers. Besides epoxy resins based on diglycidyl ether of bisphenol A, other polymer networks, such as aromatic polyesters, polylactic acid (polylactide), polyhydroxyurethanes, epoxidized soybean oil with citric acid and polybutadiene have been reported.

In addition, malleable, repairable, and reprogrammable shape memory polymers having hindered urea bonds are described in the art, including the formation of linear polyurea polymers with dynamic bonds. However, there is the requirement of additional reactants such as polyols for the formation of cross-linked three-dimensional polymers, which do not provide uniformity to the structure.

Furthermore, recyclable three-dimensional networks based on polyurea copolymers are described in WO 2021/122472 A1. The polyurea copolymer of WO 2021/122472 A1 is obtained by reacting isocyanates with a compound having two secondary amino groups and the related synthesis process. The polyurea polymer is described as having a uniform three-dimensional network structure, which had been prepared without using any additional reactants such as polyols and yet having dynamic bonds. WO 2022/189242 A1 discloses a process for treating polyurethane, polyurea and/or polyurethane-polyurea copolymers with the compound having two secondary amino groups of WO 2021/122472 A1. Urea bonds based on sterically hindered secondary amines have shown to be capable of a catalyst free reversible dissociation. The introduction of a bulky substituent to a nitrogen atom has been shown as weakening the urea bond. There is a dissociation equilibrium of open and closed bonds, which shifts to the open side by increasing the temperature. This equilibrium and thus the dynamics of the system can be adjusted by the choice of the bulky substituent of the secondary amine. The hindered urea bonds (HUBs) can be readily synthesized from conventional isocyanates and the respective hindered secondary amine.

However, despite the fact that malleable and repairable polymeric materials based on, for example, polyurea copolymers are already described, there is still an ongoing need for recyclable polymeric materials.

Thus, the object of the present invention was the provision of further recyclable polymeric materials.

### 1^{st} aspect - poly(urea-urethane) polymer

In a first aspect, the problem was solved by a poly(urea-urethane) polymer, obtained or obtainable by reacting
(i) at least one isocyanate;
(ii) at least one compound comprising a hydroxyl group and a secondary amino group having the following formula (I) 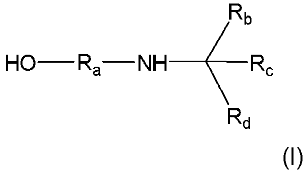
   wherein -Rₐ- is selected from the group consisting of -Z₁-, -Z₂-, -Z₃-, -Z₄-, -Z₅-, -Z₆-, - Z₇-,-Z₈-, -Z₉-, -Z₁₀-, -Z₁₂-, -Z₁-Z₅-, -Z₅-Z₁-Z₅-, -Z₁-Z₆-, -Z₁-Z₇-, -Z₁-Z₈-, -Z₁-Z₉-, -Z₉-Z₁-Z₉-, -Z₁-Z₁₀-, -Z₃-Z₅-, -Z₃-Z₆-, -Z₃-Z₇-, -Z₃-Z₈-, -Z₃-Z₉-, -Z₃-Z₁₀-, -Z₁-Z₅-Z₁-, -Z₁-Z₉-Z₁-, -Z₁-Z₁₂-, and -Z₁-Z₁₁-Z₁- ; wherein
   -Z₁- is a substituted or unsubstituted, linear or branched C₁-C₃₀ alkylene;
   -Z₂- is a substituted or unsubstituted, linear or branched 2- to 300,000-membered heteroalkylene;
   -Z₃- is a substituted or unsubstituted, linear or branched C₂-C₃₀ alkenylene;
   -Z₄- is a substituted or unsubstituted, linear or branched 3- to 30-membered heteroalkenylene;
   -Z₅- is a substituted or unsubstituted C₅-C₃₀ cycloalkylene;
   -Z₆- is a substituted or unsubstituted 5- to 30-membered heterocycloalkylene;
   -Z₇- is a substituted or unsubstituted C₅-C₃₀ cycloalkenylene;
   -Z₈- is a substituted or unsubstituted 5- to 30-membered heterocycloalkenylene;
   -Z₉- is a substituted or unsubstituted C₆-C₃₀ arylene, preferably with one substituent selected from hydrogen atom, -NHR or -OR, wherein R is selected from the group consisting of H and substituted or unsubstituted, linear or branched C₁-C₁₀ alkyl;
   -Z₁₀- is a substituted or unsubstituted 5- to 30-membered heteroarylene;
   -Z₁₁- is-N(R_{c'})-;
   -Z₁₂- is a substituted or unsubstituted 5- to 30-membered heterocycloalkyl(ene), wherein at least one of the one or more heteroatoms of Z₁₂ is from NH;
   wherein
   (A) R_{b}, R_{c}, R_{d} and optionally R_{c'} independently of each other are selected from the group consisting of hydrogen, linear or branched, substituted or unsubstituted C₁-C₃₀ alkyl, linear or branched, substituted or unsubstituted C₂-C₃₀ alkenyl, substituted or unsubstituted, linear or branched 2- to 30-membered heteroalkyl, substituted or unsubstituted, linear or branched 3- to 30-membered heteroalkenyl, substituted or unsubstituted C₅-C₃₀ cycloalkyl, substituted or unsubstituted C₅-C₃₀ cycloalkenyl, substituted or unsubstituted 5- to 30-membered heterocycloalkyl, substituted or unsubstituted 5-to 30-membered heterocycloalkenyl, substituted or unsubstituted C₆-C₃₀ aryl, substituted or unsubstituted 5- to 30-membered heteroaryl, substituted or unsubstituted C₁-C₁₀ alkylene C₅-C₃₀ cycloalkyl, substituted or unsubstituted C₁-C₁₀ alkylene C₅-C₃₀ cycloalkenyl, substituted or unsubstituted C₁-C₁₀ alkylene 5- to 30-membered heterocycloalkyl, substituted or unsubstituted C₁-C₁₀ alkylene 5- to 30-membered heterocycloalkenyl, substituted or unsubstituted C₁-C₁₀ alkylene C₆-C₃₀ aryl and substituted or unsubstituted C₁-C₁₀ alkylene 5- to 30-membered heteroaryl,
      or
   (B) the C atom bearing R_{b}, R_{c}, R_{d} and R_{b} form a substituted or unsubstituted C₆-C₃₀ aryl, or a substituted or unsubstituted 5- to 30-membered heteroaryl, and both R_{c} and R_{d} are none.

A poly(urea-urethane) polymer is a polymer that contains urea linkages and urethane linkages in its backbone. In the present case, the poly(urea-urethane) polymer obtained or obtainable from reacting (i) and (ii) has hindered urea bonds (HUBs) due to the sterically demanding substituents of the secondary amino group in the compound of formula (I). In addition, the hydroxyl group also reacts with isocyanate groups to form a urethane bond. For the resulting poly(ureaurethane) polymer, it was shown that after its formation, it is (re-)formable at slightly elevated temperature and/or pressure, thus giving access to a new group of recyclable polymeric materials.

The wording "-Z₁₂- is a substituted or unsubstituted 5- to 30-membered heterocycloalkyl(ene), wherein at least one of the one or more heteroatoms of -Z₁₂- is from NH" mean first, that the "NH" is the NH located between Rₐ and the C atom bearing R_{b}, R_{c}, R_{d} and second, the wording means that if Rₐ is -Z₁₂- then Rₐ and the NH group form a 5- to 30-membered heterocycloalkyl(ene) group, for example, a piperidine group, wherein the hydroxyl group of formula (I) is preferably not directly connected to the nitrogen atom of the piperidine and wherein preferably R_{b}, R_{c}, R_{d} and the C atom bearing them are none. In some embodiments, formula (I) with Rₐ being -Z₁₂- is 4-hydroxypiperidine.

The expression "heterocycloalkyl(ene)" with respect to -Z₁₂- indicates that said residue can be seen as a bridging structural element - heterocycloalkylene- between the terminal OH group and the C atom bearing R_{b}, R_{c}, R_{d} but could also be seen as terminal structural element - heterocycloalkyl- bearing the terminal OH group as substituent.

### Compound (ii)

The compound according to (ii), that is the compound comprising a hydroxyl group and a secondary amino group having the following formula (I), is also called N-alkyl alkanolamine or amine-alcohol. In some preferred embodiments of the poly(urea-urethane) polymer, R_{b}, R_{c}, and R_{d} independently of each other are selected from the group consisting of hydrogen, methyl, ethyl, propyl, iso-propyl, butyl, pentyl, hexyl, octyl, dodecyl, sec-butyl, tert-butyl, sec-isopentyl, 2-pentyl, 2-methyl-4-pentyl, 3-pentyl, 2-methyl-pentyl, 2,6-dimethyl-4-heptyl, 3-pinanyl-methyl, cyclopentyl, cyclohexyl, dicyclohexylmethyl, cyclohexylmethyl, cyclododecyl, phenyl, benzyl, cyclohexyl(phenyl)methyl, and -C(OH)H-Rₖ, wherein Rₖ is selected from the group consisting of hydrogen, linear or branched, substituted or unsubstituted C₁-C₃₀ alkyl, linear or branched, substituted or unsubstituted C₂-C₃₀ alkenyl, substituted or unsubstituted, linear or branched 2- to 30-membered heteroalkyl, substituted or unsubstituted, linear or branched 3- to 30-membered heteroalkenyl, substituted or unsubstituted C₅-C₃₀ cycloalkyl, substituted or unsubstituted C₅-C₃₀ cycloalkenyl, substituted or unsubstituted 5- to 30-membered heterocycloalkyl, substituted or unsubstituted 5- to 30-membered heterocycloalkenyl, substituted or unsubstituted C₆-C₃₀ aryl, substituted or unsubstituted 5- to 30-membered heteroaryl, substituted or unsubstituted C₁-C₁₀ alkylene C₅-C₃₀ cycloalkyl, substituted or unsubstituted C₁-C₁₀ alkylene C₅-C₃₀ cycloalkenyl, substituted or unsubstituted C₁-C₁₀ alkylene 5- to 30-membered heterocycloalkyl, substituted or unsubstituted C₁-C₁₀ alkylene 5- to 30-membered heterocycloalkenyl, substituted or unsubstituted C₁-C₁₀ alkylene C₆-C₃₀ aryl and substituted or unsubstituted C₁-C₁₀ alkylene 5- to 30-membered heteroaryl.

In some preferred embodiments of the poly(urea-urethane) polymer, R_{b} is a hydrogen atom and R_{c}, R_{d} are independently of each other are selected from the group consisting of methyl, ethyl, propyl, iso-propyl, butyl, pentyl, hexyl, octyl, dodecyl, sec-butyl, tert-butyl, sec-isopentyl, 2-pentyl, 2-methyl-4-pentyl, 3-pentyl, 2-methyl-pentyl, 2,6-dimethyl-4-heptyl, 3-pinanyl-methyl, cyclopentyl, cyclohexyl, dicyclohexylmethyl, cyclohexylmethyl, cyclododecyl, phenyl, benzyl, cyclohexyl(phenyl)methyl, and -C(OH)H-Rₖ.

In some preferred embodiments of the poly(urea-urethane) polymer, R_{b} is a hydrogen atom and R_{c}, R_{d} are independently of each other are selected from the group consisting of methyl, ethyl, propyl, iso-propyl, butyl, pentyl, hexyl, octyl, dodecyl, sec-butyl, tert-butyl, sec-isopentyl, 2-pentyl, 2-methyl-4-pentyl, 3-pentyl, 2-methyl-pentyl, 2,6-dimethyl-4-heptyl, and 3-pinanyl-methyl.

In some preferred embodiments of the poly(urea-urethane) polymer, the C atom bearing R_{b}, R_{c}, R_{d} and R_{b} form a substituted or unsubstituted C₆-C₃₀ aryl, and both R_{c} and R_{d} are none, wherein the C₆-C₃₀ aryl is a C₆-C₁₂ aryl comprising one or more aromatic ring system(s), which are, in case of two or more rings systems, conjugated or isolated, wherein the C₆-C₁₂ aryl is preferably selected from the group consisting of phenyl, naphthyl, biphenyl, fluorenyl, and indyl.

In some preferred embodiments of the poly(urea-urethane) polymer, the C₆-C₃₀ aryl is unsubstituted or has at least one substituent selected from the group consisting of branched or straight C1 to C10 alkyl, wherein said at least one substituent is preferably not situated at a C atom of the C₆-C₃₀ aryl adjacent to the C atom forming the bond to NH.

In some preferred embodiments of the poly(urea-urethane) polymer, the C₆-C₃₀ aryl is a phenyl ring, which preferably has hydrogen atoms at the C atoms adjacent to the C atom forming the bond to NH (ortho positions) and which preferably has at least one substituent at the meta and/or para position(s), which is selected from the group consisting of hydrogen atom and branched or straight C₁-C₁₀ alkyl group, more preferably from the group consisting of hydrogen atom and branched or straight C₁-C₅ alkyl group.

In some preferred embodiments of the poly(urea-urethane) polymer, Rₐ is a substituted or unsubstituted, linear or branched C₁-C₃₀ alkylene, preferably a substituted or unsubstituted, linear C₁-C₃₀ alkylene, more preferably an unsubstituted linear C₁-C₁₀ alkylene. In some preferred embodiments of the poly(urea-urethane) polymer, the compound of formula (I) is 2-(isopropylamino)ethanol.

In some preferred embodiments of the poly(urea-urethane) polymer, Rₐ is -Z₁₂-, which is a substituted or unsubstituted 5- to 30-membered heterocycloalkyl(ene), wherein at least one of the one or more heteroatoms of Z₁₂ is from NH, Rₐ (Z₁₂) preferably being selected from the group consisting of aziridinyl(ene), pyrrolidinyl(ene), piperidinyl(ene), piperazinyl(ene), morpholinyl(ene), thiomorpholinyl(ene), tetrahydrofuranyl(ene), tetrahydrothiofuranyl(ene), tetrahydropyranyl(ene) and pyranyl(ene), more preferably piperidinyl(ene). In some preferred embodiments of the poly(urea-urethane) polymer, the compound of formula (I) is 4-hydroxypiperidin.

### Isocyanate (i)

In some preferred embodiments of the poly(urea-urethane) polymer, the at least one isocyanate (i) is a polyisocyanate having at least two isocyanate groups, preferably selected from the group consisting of monomeric methylene diphenylene diisocyanate (mMDI), polymethylene polyphenylene polyisocyanate (pMDI), a mixture of monomer methylene diphenylene diisocyanate and polymethylene polyphenylene polyisocyanate (MDI), tolylene diisocyanate (TDI), naphthylene 1,5-diisocyanate (1,5-NDI), 1,4-diisocyanate, pentane 1,5-diisocyanate (PDI), hexane 1,6-diisocyanate (HDI), methylene-bis(cyclohexyl isocyanate) (H12MDI) and a mixture of two or more thereof, more preferably selected from the group consisting of monomeric methylene diphenylene diisocyanate (mMDI), polymethylene polyphenylene polyisocya-nate (pMDI), a mixture of monomer methylene diphenylene diisocyanate and polymethylene polyphenylene polyisocyanate (MDI) and tolylene diisocyanate (TDI). The at least one polyisocyanate (i) contains at least two reactive isocyanate groups per molecule, i.e. the functionality is at least 2. If the at least one polyisocyanate does not have a uniform functionality, the number-weighted average value of the functionality of the at least one polyisocyanate is at least 2. Suitable di- and polyisocyanates have an average functionality in the range of from 2.0 to 2.9, preferably in the range of from 2.1 to 2.8.

TDI preferably comprises, more preferably consists of, 2,4-TDI, 2,6-TDI or a mixture of 2,4-TDI, and 2,6-TDI.

Monomeric methylene diphenylene diisocyanate (mMDI) comprises, more preferably consists of, one or more of 4,4'-methylene(diphenyl diisocyanate) (4,4'-MDI), 2,2'- methylene (diphenyl diisocyanate) (2,2'-MDI) and 2,4'- methylene (diphenyl diisocyanate) (2,4'-MDI), more preferably 4,4'-methylene(diphenyl diisocyanate) (4,4'-MDI). Polymethylene polyphenylene polyisocyanate (pMDI) is a mixture of compounds of formula (II) 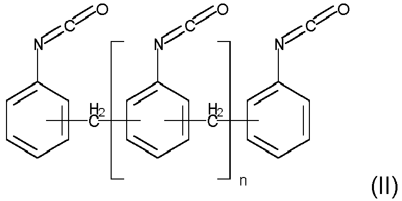 with n phenylene groups, each carrying an isocyanate group, wherein n is zero or an integer in the range of from 1 to 6, wherein the MDI-Isomers therein comprise 4,4'-MDI, 2,4-MDI, and 2,2'-MDI.

Other possible isocyanates are mentioned by way of example in "Kunststoffhandbuch [Plastics handbook], volume 7, Polyurethane [Polyurethanes]", Carl Hanser Verlag, 3rd edition 1993, chapter 3.2 and 3.3.2. Preferably, the at least one isocyanate (i) has a NCO functionality of 2 or more, more preferably in the range of from 2 to 3. In some embodiments, in cases where HDI is used as isocyanate according to (i), the at least one compound comprising a hydroxyl group and a secondary amino group of formula (I) according to (ii) has a functionality of >2.

In some preferred embodiments, the poly(urea-urethane) polymer is characterized in that it is (re-)formable at a pressure in the range of from 10³ to 10⁷ Pa, preferably in the range of from 1.5 x 10³ to 10⁶ Pa; and/or, preferably and, at a temperature in the range of from 60 °C to a temperature below the decomposition temperature of the respective poly(urea-urethane) polymer, preferably in the range of from 60 to 200 °C, more preferably in the range of from 70 to 150 °C.

### Absence of polyols

In some preferred embodiments of the poly(urea-urethane) polymer, (i) and (ii) are reacted in the presence of less than 1 weight-%, preferably of less than 0.5 weight-%, more preferably of less than 0.1 weight-%, of a polyol, based on the sum of the weight-% of (i) and (ii) being 100 weight-%, more preferably (i) and (ii) are reacted in the absence of a polyol.

A polyol has preferably at least two hydroxyl groups and is preferably selected from the group consisting of polyester polyol, polyetherester polyol, polycarbonate polyol, polyacrylate polyol, polyolefine polyol, polyether polyol, and mixtures of two or more thereof.

### Catalyst

In some preferred embodiments of the poly(urea-urethane) polymer, (i) and (ii) are reacted in the presence of a catalyst, preferably an organometallic catalyst, which is more preferably selected from the group consisting of tin, titanium, zirconium, hafnium, bismuth, zinc, aluminum and iron organyl, wherein the catalyst is more preferably a tin organyl compound, preferably preferably selected from the group consisting of tin dialkyl, such as dimethyltin or diethyltin, tin organyl compound of aliphatic carboxylic acid, preferably selected from tin diacetate, tin dilaurate, dibutyltin diacetate, dibutyltin dilaurate, tin isooctoate, tin dioctoate, and mixtures of two or more thereof.

In some preferred embodiments of the poly(urea-urethane) polymer, (i) and (ii) are reacted in the presence of a catalyst, which is selected from the group consisting of tertiary amine, alkanolamine and mixtures of tertiary amine and alkanolamine, wherein the tertiary amine is preferably selected from the group consisting of triethylamine, tributylamine, dimethylbenzylamin, dicyclohexylmethylamin, dimethylcyclohexylamine, N,N,N',N'-tetramethyldiaminodiethylether, bis-(dimethylaminopropyl)-urea, N-methyl-morpholin, N-ethylmorpholin, N-cyclohexyl-morpholin, N,N,N',N'tetrame¬thylethylendiamine, N,N,N,N-tetramethylbutandiamine, N,N,N,N-tetramethylhexandiamine-1,6, pentamethyldiethylentriamine, bis(2-dimethylaminoethyl)ether, dimethylpiperazin, N-dimethyl¬aminoethylpiperidin, 1,2-dimethylimidazol, 1-azabicyclo-(2,2,0)-octane, 1,4-diazabicyclo.¬(2,2,2).octane (Dabco), triethylendiamine, and mixtures of two or more of these tertiary amines; and the alkanolamine is preferably from the group consisting of triethanolamine, triisopropanolamine, N-methyl diethanolamine, N-ethyl diethanolamine, dimethylaminoethanol, 2-(N,N-dimethylaminoethoxy)¬ethanol, N,N',N"-tris-(dialkylaminoalkyl)hexahydrotriazine (preferably N,N',N"-tris-(dimethylamino-propyl)-s-hexahydrotriazin), and mixtures of two or more of these alkanolamines.

In some preferred embodiments of the poly(urea-urethane) polymer, (i) and (ii) are reacted in the absence of a catalyst, preferably in the absence of a catalyst selected from the group consisting of organometallic catalyst, tertiary amine and alkanolamine, more preferably less than 100 ppm of a catalyst, more preferably less than 100 ppm of a catalyst selected from the group consisting of organometallic catalyst, tertiary amine and alkanolamine are present, based on the weight of isocyanate (i) being 100 weight-%.

### Solvents

In some preferred embodiments of the poly(urea-urethane) polymer, (i) and (ii) are reacted in the presence of a solvent, wherein the solvent is preferably one or more organic aprotic solvent, more preferably selected from the group consisting of 1,3-dimethyl-2-imidazolidinon (DMI); dichlorobenzene, preferably 1,2-dichlorobenzene, 1, 2, 3-trichlorobenzene; 1, 2, 4- trichlorobenzene,1,3,5-trichlorobenzene, sulfolane (tetrahydrothiophen-1,1-dioxide), dichloromethane (DCM), chloroform, di(C1-C5 alkyl)ether, dimethylformamide (DMF), acetonitrile, dimethyl sulfoxide, benzene, toluene, xylene, mesitylene, N-methyl pyrrolidone, dioxane, tetrahydrofuran, butyl acetate, propyl acetate, ethyl acetate, 4-formylmorpholine, tertbutylpyrrolidin-2-on, n-butylpyrrolidin-2-on, and mixtures of two or more of these solvents.

In some preferred embodiments of the poly(urea-urethane) polymer, (i) and (ii) are reacted in the absence of water, wherein preferably less than 0.01 weight-%, more preferably less than 0.005 weight-%, more preferably less than 0.002 weight-% of water are present, based on the total weight of the solvent being 100 weight-%.

### Atmosphere

In some preferred embodiments of the poly(urea-urethane) polymer, (i) and (ii) are reacted in a protective atmosphere, more preferably an inert gas atmosphere, wherein the inert gas is preferably selected from the group consisting of helium, neon, argon, krypton, radon, xenon, nitrogen and mixtures of two or more of these inert gases.

### 2^{nd} aspect - method for preparing the poly(urea-urethane) polymer

A second aspect of the invention is directed to a method for preparing a poly(urea-urethane) polymer, preferably a poly(urea-urethane) polymer according to the first aspect, the method comprising:
(a) providing at least one isocyanate (i);
(b) providing at least one compound (ii) comprising a hydroxyl group and a secondary amino group having the following formula (I) 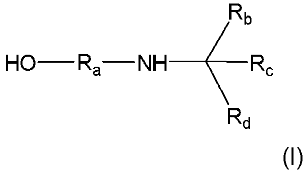
   wherein -Rₐ- is selected from the group consisting of -Z₁-, -Z₂-, -Z₃-, -Z₄-, -Z₅-, -Z₆-, - Z₇-, -Z₇-, -Z₈-, -Z₉-, -Z₁₀-, -Z₁₂-, -Z₁-Z₅-, -Z₅-Z₁-Z₅-, -Z₁-Z₆-, -Z₁-Z₇-, -Z₁-Z₈-, -Z₁-Z₉-, -Z₉-Z₁-Z₉-, -Z₁-Z₁₀-, -Z₃-Z₅-, -Z₃-Z₆-, -Z₃-Z₇-, -Z₃-Z₈-, -Z₃-Z₉-, -Z₃-Z₁₀-, -Z₁-Z₅-Z₁-, -Z₁-Z₉-Z₁-, -Z₁-Z₁₂-and -Z₁-Z₁₁-Z₁-; wherein
   -Z₁- is a substituted or unsubstituted, linear or branched C₁-C₃₀ alkylene;
   -Z₂- is a substituted or unsubstituted, linear or branched 2- to 300,000-membered heteroalkylene;
   -Z₃- is a substituted or unsubstituted, linear or branched C₂-C₃₀ alkenylene;
   -Z₄- is a substituted or unsubstituted, linear or branched 3- to 30-membered heteroalkenylene;
   -Z₅- is a substituted or unsubstituted C₅-C₃₀ cycloalkylene;
   -Z₆- is a substituted or unsubstituted 5- to 30-membered heterocycloalkylene;
   -Z₇- is a substituted or unsubstituted C₅-C₃₀ cycloalkenylene;
   -Z₈- is a substituted or unsubstituted 5- to 30-membered heterocycloalkenylen;
   -Z₉- is a substituted or unsubstituted C₆-C₃₀ arylene, preferably with one substituent selected from hydrogen atom, -NHR or -OR, wherein is selected from the group consisting of H and substituted or unsubstituted, linear or branched C₁-C₁₀ alkyl;
   -Z₁₀- is a substituted or unsubstituted 5- to 30-membered heteroarylene;
   -Z₁₁- is-N(R_{c'})-;
   -Z₁₂- is a substituted or unsubstituted 5- to 30-membered heterocycloalkylene, wherein at least one of the one or more heteroatoms of Z₁₂ is from NH (the NH located between Rₐ and the C atom bearing R_{b}, R_{c}, R_{d});
   wherein
   (A) R_{b}, R_{c}, R_{d} independently of each other are selected from the group consisting of hydrogen, linear or branched, substituted or unsubstituted C₁-C₃₀ alkyl, linear or branched, substituted or unsubstituted C₂-C₃₀ alkenyl, substituted or unsubstituted, linear or branched 2- to 30-membered heteroalkyl, substituted or unsubstituted, linear or branched 3- to 30-membered heteroalkenyl, substituted or unsubstituted C₅-C₃₀ cycloalkyl, substituted or unsubstituted C₅-C₃₀ cycloalkenyl, substituted or unsubstituted 5- to 30-membered heterocycloalkyl, substituted or unsubstituted 5- to 30-membered heterocycloalkenyl, substituted or unsubstituted C₆-C₃₀ aryl, substituted or unsubstituted 5- to 30-membered heteroaryl, substituted or unsubstituted C₁-C₁₀ alkylene C₅-C₃₀ cycloalkyl, substituted or unsubstituted C₁-C₁₀ alkylene C₅-C₃₀ cycloalkenyl, substituted or unsubstituted C₁-C₁₀ alkylene 5- to 30-membered heterocycloalkyl, substituted or unsubstituted C₁-C₁₀ alkylene 5- to 30-membered heterocycloalkenyl, substituted or unsubstituted C₁-C₁₀ alkylene C₆-C₃₀ aryl and substituted or unsubstituted C₁-C₁₀ alkylene 5- to 30-membered heteroaryl,
      or
   (B) the C atom bearing R_{b}, R_{c}, R_{d} and R_{b} form a substituted or unsubstituted C₆-C₃₀ aryl, or a substituted or unsubstituted C₅-C₃₀ heteroaryl and both R_{c} and R_{d} are none;
(c) reacting the at least one isocyanate (i) according to (a) and the at least one compound (ii) according to (b) with each other, thereby forming a poly(urea-urethane) polymer.

All details, embodiments and preferred embodiments described above in the section related to the first aspect of the invention also apply for the second aspect of the invention.

In some preferred embodiments of the method for preparing a poly(urea-urethane) polymer, R_{b}, R_{c}, and R_{d} independently of each other are selected from the group consisting of hydrogen, methyl, ethyl, propyl, iso-propyl, butyl, pentyl, hexyl, octyl, dodecyl, sec-butyl, tert-butyl, sec-isopentyl, 2-pentyl, 2-methyl-4-pentyl, 3-pentyl, 2-methyl-pentyl, 2,6-dimethyl-4-heptyl, 3-pinanyl-methyl, cyclopentyl, cyclohexyl, dicyclohexylmethyl, cyclohexylmethyl, cyclododecyl, phenyl, benzyl, cyclohexyl(phenyl)methyl, and -C(OH)H-Rₖ, wherein Rₖ is selected from the group consisting of hydrogen, linear or branched, substituted or unsubstituted C₁-C₃₀ alkyl, linear or branched, substituted or unsubstituted C₂-C₃₀ alkenyl, substituted or unsubstituted, linear or branched 2- to 30-membered heteroalkyl, substituted or unsubstituted, linear or branched 3- to 30-membered heteroalkenyl, substituted or unsubstituted C₅-C₃₀ cycloalkyl, substituted or unsubstituted C₅-C₃₀ cycloalkenyl, substituted or unsubstituted 5- to 30-membered heterocycloalkyl, substituted or unsubstituted 5- to 30-membered heterocycloalkenyl, substituted or unsubstituted C₆-C₃₀ aryl, substituted or unsubstituted 5- to 30-membered heteroaryl, substituted or unsubstituted C₁-C₁₀ alkylene C₅-C₃₀ cycloalkyl, substituted or unsubstituted C₁-C₁₀ alkylene C₅-C₃₀ cycloalkenyl, substituted or unsubstituted C₁-C₁₀ alkylene 5- to 30-membered heterocycloalkyl, substituted or unsubstituted C₁-C₁₀ alkylene 5- to 30-membered heterocycloalkenyl, substituted or unsubstituted C₁-C₁₀ alkylene C₆-C₃₀ aryl and substituted or unsubstituted C₁-C₁₀ alkylene 5- to 30-membered heteroaryl.

In some preferred embodiments of the method for preparing a poly(urea-urethane) polymer, R_{b} is a hydrogen atom and R_{c}, R_{d} are independently of each other are selected from the group consisting of methyl, ethyl, propyl, iso-propyl, butyl, pentyl, hexyl, octyl, dodecyl, sec-butyl, tert-butyl, sec-isopentyl, 2-pentyl, 2-methyl-4-pentyl, 3-pentyl, 2-methyl-pentyl, 2,6-dimethyl-4-heptyl, 3-pinanyl-methyl, cyclopentyl, cyclohexyl, dicyclohexylmethyl, cyclohexylmethyl, cyclododecyl, phenyl, benzyl, cyclohexyl(phenyl)methyl, and -C(OH)H-Rₖ.

In some preferred embodiments of the method for preparing a poly(urea-urethane) polymer, R_{b} is a hydrogen atom and R_{c}, R_{d} are independently of each other are selected from the group consisting of methyl, ethyl, propyl, iso-propyl, butyl, pentyl, hexyl, octyl, dodecyl, sec-butyl, tert-butyl, sec-isopentyl, 2-pentyl, 2-methyl-4-pentyl, 3-pentyl, 2-methyl-pentyl, 2,6-dimethyl-4-heptyl, and 3-pinanyl-methyl.

In some preferred embodiments of the method for preparing a poly(urea-urethane) polymer, the C atom bearing R_{b}, R_{c}, R_{d} and R_{b} form a substituted or unsubstituted C₆-C₃₀ aryl, and both R_{c} and R_{d} are none, wherein the C₆-C₃₀ aryl is a C₆-C₁₂ aryl comprising one or more aromatic ring system(s), which are, in case of two or more rings systems, conjugated or isolated, wherein the C₆-C₁₂ aryl is preferably selected from the group consisting of phenyl, naphthyl, biphenyl, fluorenyl, and indyl.

In some preferred embodiments of the method for preparing a poly(urea-urethane) polymer, the C₆-C₃₀ aryl is unsubstituted or has at least one substituent selected from the group consisting of branched or straight C1 to C10 alkyl, wherein said at least one substituent is preferably not situated at a C atom of the C₆-C₃₀ aryl adjacent to the C atom forming the bond to NH.

In some preferred embodiments of the method for preparing a poly(urea-urethane) polymer, the C₆-C₃₀ aryl is a phenyl ring, which preferably has hydrogen atoms at the C atoms adjacent to the C atom forming the bond to NH (ortho positions) and which preferably has at least one substituent at the meta and/or para position(s), which is selected from the group consisting of hydrogen atom and branched or straight C₁-C₁₀ alkyl group, more preferably from the group consisting of hydrogen atom and branched or straight C₁-C₅ alkyl group.

In some preferred embodiments of the method for preparing a poly(urea-urethane) polymer, Rₐ is a substituted or unsubstituted, linear or branched C₁-C₃₀ alkylene, preferably a substituted or unsubstituted, linear C₁-C₃₀ alkylene, more preferably an unsubstituted linear C₁-C₁₀ alkylene.

In some preferred embodiments of the method for preparing a poly(urea-urethane) polymer, Rₐ is -Z₁₂-, which is a substituted or unsubstituted 5- to 30-membered heterocycloalkyl(ene), wherein at least one of the one or more heteroatoms of Z₁₂ is from NH, Rₐ (Z₁₂) preferably being selected from the group consisting of aziridinyl(ene), pyrrolidinyl(ene), piperidinyl(ene), piperazinyl(ene), morpholinyl(ene), thiomorpholinyl(ene), tetrahydrofuranyl(ene), tetrahydrothiofuranyl(ene), tetrahydropyranyl(ene) and pyranyl(ene), more preferably piperidinyl(ene).

### Isocyanate (i)

In some preferred embodiments of the method for preparing a poly(urea-urethane) polymer, the at least one isocyanate (i) is a polyisocyanate having at least two isocyanate groups, preferably selected from the group consisting of monomeric methylene diphenylene diisocyanate (mMDI), polymethylene polyphenylene polyisocyanate (pMDI), a mixture of monomer methylene diphenylene diisocyanate and polymethylene polyphenylene polyisocyanate (MDI), tolylene diisocyanate (TDI), naphthylene 1,5-diisocyanate (1,5-NDI), 1,4-diisocyanate, pentane 1,5-diisocyanate (PDI), hexane 1,6-diisocyanate (HDI), methylene-bis(cyclohexyl isocyanate) (H12MDI) and a mixture of two or more thereof, more preferably selected from the group consisting of monomeric methylene diphenylene diisocyanate (mMDI), polymethylene polyphenylene polyisocyanate (pMDI), a mixture of monomer methylene diphenylene diisocyanate and polymethylene polyphenylene polyisocyanate (MDI) and tolylene diisocyanate (TDI). The at least one polyisocyanate (i) contains at least two reactive isocyanate groups per molecule, i.e. the functionality is at least 2. If the at least one polyisocyanate does not have a uniform functionality, the number-weighted average value of the functionality of the at least one polyisocyanate is at least 2. Suitable di- and polyisocyanates have an average functionality in the range of from 2.0 to 2.9, preferably in the range of from 2.1 to 2.8.

In some preferred embodiments of the method for preparing a poly(urea-urethane) polymer, (i) and (ii) are reacted in the presence of less than 1 weight-%, preferably of less than 0.5 weight%, more preferably of less than 0.1 weight-%, of a polyol, based on the sum of the weight-% of (i) and (ii) being 100 weight-%, more preferably (i) and (ii) are reacted in the absence of a polyol.

### Catalyst

In some preferred embodiments of the method for preparing a poly(urea-urethane) polymer, (i) and (ii) are reacted in the presence of a catalyst, preferably an organometallic catalyst, which is more preferably selected from the group consisting of tin, titanium, zirconium, hafnium, bismuth, zinc, aluminum and iron organyl, wherein the catalyst is more preferably a tin organyl compound, preferably preferably selected from the group consisting of tin dialkyl, such as dimethyltin or diethyltin, tin organyl compound of aliphatic carboxylic acid, preferably selected from tin diacetate, tin dilaurate, dibutyltin diacetate, dibutyltin dilaurate, tin isooctoate, tin dioctoate, and mixtures of two or more thereof.

In some preferred embodiments of the method for preparing a poly(urea-urethane) polymer, (i) and (ii) are reacted in the presence of a catalyst, which is selected from the group consisting of tertiary amine, alkanolamine and mixtures of tertiary amine and alkanolamine, wherein the tertiary amine is preferably selected from the group consisting of triethylamine, tributylamine, dimethylbenzylamin, dicyclohexylmethylamin, dimethylcyclohexylamine, N,N,N',N'-tetramethyldiaminodiethylether, bis-(dimethylaminopropyl)-urea, N-methyl-morpholin, N-ethylmorpholin, N-cyclohexyl-morpholin, N,N,N',N'-tetrame¬thylethylendiamine, N,N,N,N-tetramethylbutandiamine, N,N,N,N-tetramethylhexandiamine-1,6, pentamethyldiethylentriamine, bis(2-dimethylaminoethyl)ether, dimethylpiperazin, N-dimethyl¬aminoethylpiperidin, 1,2-dimethylimidazol, 1-azabicyclo-(2,2,0)-octane, 1,4-diazabicyclo.¬(2,2,2).octane (Dabco), triethylendiamine, and mixtures of two or more of these tertiary amines; and the alkanolamine is preferably from the group consisting of triethanolamine, triisopropanolamine, N-methyl diethanolamine, N-ethyl diethanolamine, dimethylaminoethanol, 2-(N,N-dimethylaminoethoxy)¬ethanol, N,N',N"-tris-(dialkylaminoalkyl)hexahydrotriazine (preferably N,N',N"-tris-(dimethylamino-propyl)-s-hexahydrotriazin), and mixtures of two or more of these alkanolamines.

In some preferred embodiments of the method for preparing a poly(urea-urethane) polymer, (i) and (ii) are reacted in the absence of a catalyst, preferably in the absence of a catalyst selected from the group consisting of organometallic catalyst, tertiary amine and alkanolamine, more preferably less than 100 ppm of a catalyst, more preferably less than 100 ppm of a catalyst selected from the group consisting of organometallic catalyst, tertiary amine and alkanolamine are present, based on the weight of isocyanate (i) being 100 weight-%.

### Solvents

In some preferred embodiments of the method for preparing a poly(urea-urethane) polymer, (i) and (ii) are reacted in the presence of a solvent, wherein the solvent is preferably one or more organic aprotic solvent, more preferably selected from the group consisting of 1,3-dimethyl-2-imidazolidinon (DMI); dichlorobenzene, preferably 1,2-dichlorobenzene, 1, 2, 3-trichlorobenzene; 1, 2, 4- trichlorobenzene, 1,3,5-trichlorobenzene, sulfolane (tetrahydrothiophen-1,1-dioxide), dichloromethane (DCM), chloroform, di(C₁-C₅ alkyl)ether, dimethylformamide (DMF), acetonitrile, dimethyl sulfoxide, benzene, toluene, xylene, mesitylene, N-methyl pyrrolidone, dioxane, tetrahydrofuran, butyl acetate, propyl acetate, ethyl acetate, 4-formylmorpholine, tertbutylpyrrolidin-2-on, n-butylpyrrolidin-2-on, and mixtures of two or more of these solvents.

In some preferred embodiments of the method for preparing a poly(urea-urethane) polymer, (i) and (ii) are reacted in the absence of water, wherein preferably less than 0.01 weight-%, more preferably less than 0.005 weight-%, more preferably less than 0.002 weight-% of water are present, based on the total weight of the solvent being 100 weight-%.

### Atmosphere

In some preferred embodiments of the method for preparing a poly(urea-urethane) polymer, (i) and (ii) are reacted in a protective atmosphere, more preferably an inert gas atmosphere, wherein the inert gas is preferably selected from the group consisting of helium, neon, argon, krypton, radon, xenon, nitrogen and mixtures of two or more of these inert gases.

In some preferred embodiments of the method for preparing a poly(urea-urethane) polymer, reacting according to (c) is done at a temperature in the range of from 0 to 200 °C, preferably in the range of from 1 to 200 °C, more preferably in the range of from 10 to 150 °C, more preferably in the range of from 20 to 90 °C.

In some preferred embodiments of the method for preparing a poly(urea-urethane) polymer, the molar ratio of NCO in the isocyanate (i) to the sum of the functionalities of OH and NH of the compound (ii) is in the range of from 1 : 100 to 100 : 1, preferably in the range of from 1 : 10 to 10 : 1.

### 3^{rd} aspect - process of (re)shaping

A third aspect of the invention relates to a process for (re)shaping a poly(urea-urethane) polymer, preferably a poly(urea-urethane) polymer according to the first aspect or a poly(urea-urethane) polymer obtainable or obtained by a method according to the second aspect comprising: shaping the poly(urea-urethane) polymer, wherein shaping the polymer comprises
(x) applying pressure and heat to the poly(urea-urethane) polymer, thereby obtaining an at least partially melted poly(urea-urethane) polymer;
(x') shaping the at least partially melted poly(urea-urethane) polymer of (x), thereby obtaining a shaped body of the poly(urea-urethane) polymer.

All details, embodiments and preferred embodiments disclosed above for the first and/or the second aspect of the invention apply also for the third aspect of the invention.

In some preferred embodiments of the process for (re)shaping a poly(urea-urethane) polymer, the applied pressure according to (x) is in the range of from 10³ to 10⁷ Pa, preferably in the range of from 1.5 x 10³ to 10⁶ Pa.

In some preferred embodiments of the process for (re)shaping a poly(urea-urethane) polymer, the applied heat according to (x) is in the range of from 60 °C to a temperature below the decomposition temperature of the respective poly(urea-urethane) polymer, preferably in the range of from 60 to 200 °C, more preferably in the range of from 70 to 150 °C.

### 4^{th} aspect - article comprising the poly(urea-urethane) polymer

In a fourth aspect, the invention relates to an article comprising the poly(urea-urethane) polymer according to the first aspect, or of the poly(urea-urethane) polymer obtained or obtainable from the method of the second aspect.

All details, embodiments and preferred embodiments disclosed above for the first and/or the second aspect and/or the third aspect of the invention apply also for the fourth aspect of the invention.

In some preferred embodiments of the article comprising the poly(urea-urethane) polymer, said article is characterized in that it is (re-)formable at a pressure in the range of from 10³ to 10⁷ Pa, preferably in the range of from 1.5 x 10³ to 10⁶ Pa; and/or, preferably and, at a temperature in the range of from 60 °C to a temperature below the decomposition temperature of the respective poly(urea-urethane) polymer, preferably in the range of from 60 to 200 °C, more preferably in the range of from 70 to 150 °C.

### 5^{th} aspect - use

A fifth aspect of the invention is directed to the use of the article of the fourth aspect or of the poly(urea-urethane) polymer according to the first aspect or of the poly(urea-urethane) polymer obtained or obtainable from the method of the second aspect as a recyclable material, preferably for preparation of a coating, healable coating, recyclable rigid foam, recyclable flexible foam, part for the automotive industry, rigid foam insulation, durable elastomeric wheel, durable elastomeric tire, adhesive, surface coating, surface sealant, synthetic fiber, carpet underlay or a hard plastic part.

All details, embodiments and preferred embodiments disclosed above for the first and/or the second aspect and/or the third aspect and/or the fourth aspect of the invention apply also for the fifth aspect of the invention.

The present invention is further illustrated by the following embodiments and combinations of embodiments as indicated by the respective dependencies and back-references. In particular, it is noted that in each instance where a range of embodiments is mentioned, for example in the context of a term such as "The ... of any of embodiments 1 to 4", every embodiment in this range is meant to be explicitly disclosed for the skilled person, i.e. the wording of this term is to be understood by the skilled person as being synonymous to "The ... of any of embodiments 1, 2, 3, and 4".
1. A poly(urea-urethane) polymer, obtained or obtainable by reacting
   (i) at least one isocyanate;
   (ii) at least one compound comprising a hydroxyl group and a secondary amino group having the following formula (I) 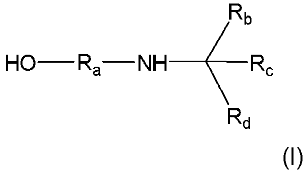
      wherein -Rₐ- is selected from the group consisting of -Z₁-, -Z₂-, -Z₃-, -Z₄-, -Z₅-,-Z₁-Z₉-, -Z₉-Z₁-Z₉-, -Z₁-Z₁₀-, -Z₃-Z₅-, -Z₃-Z₆-, -Z₃-Z₇-, -Z₃-Z₈-, -Z₃-Z₉-, -Z₃-Z₁₀-,
      -Z₁-Z₅-Z₁-, -Z₁-Z₉-Z₁-, -Z₁-Z₁₂-, and -Z₁-Z₁₁-Z₁-; wherein
      -Z₁- is a substituted or unsubstituted, linear or branched C₁-C₃₀ alkylene;
      -Z₂- is a substituted or unsubstituted, linear or branched 2- to 300,000-membered heteroalkylene;
      -Z₃- is a substituted or unsubstituted, linear or branched C₂-C₃₀ alkenylene;
      -Z₄- is a substituted or unsubstituted, linear or branched 3- to 30-membered heteroalkenylene;
      -Z₅- is a substituted or unsubstituted C₅-C₃₀ cycloalkylene;
      -Z₆- is a substituted or unsubstituted 5- to 30-membered heterocycloalkylene;
      -Z₇- is a substituted or unsubstituted C₅-C₃₀ cycloalkenylene;
      -Z₈- is a substituted or unsubstituted 5- to 30-membered heterocycloalkenylene;
      -Z₉- is a substituted or unsubstituted C₆-C₃₀ arylene, preferably with one substituent selected from hydrogen atom, -NHR or -OR, wherein R is selected from the group consisting of H and substituted or unsubstituted, linear or branched C₁-C₁₀ alkyl;
      -Z₁₀- is a substituted or unsubstituted 5- to 30-membered heteroarylene;
      -Z₁₁- is-N(R_{c'})-;
      -Z₁₂- is a substituted or unsubstituted 5- to 30-membered heterocycloalkyl(ene), wherein at least one of the one or more heteroatoms of Z₁₂ is from NH;
      wherein
      (A) Rb, R_{c}, R_{d} and optionally R_{c'} independently of each other are selected from the group consisting of hydrogen, linear or branched, substituted or unsubstituted C₁-C₃₀ alkyl, linear or branched, substituted or unsubstituted C₂-C₃₀ alkenyl, substituted or unsubstituted, linear or branched 2- to 30-membered heteroalkyl, substituted or unsubstituted, linear or branched 3- to 30-membered heteroalkenyl, substituted or unsubstituted C₅-C₃₀ cycloalkyl, substituted or unsubstituted C₅-C₃₀ cycloalkenyl, substituted or unsubstituted 5- to 30-membered heterocycloalkyl, substituted or unsubstituted 5- to 30-membered heterocycloalkenyl, substituted or unsubstituted C₆-C₃₀ aryl, substituted or unsubstituted 5- to 30-membered heteroaryl, substituted or unsubstituted C₁-C₁₀ alkylene C₅-C₃₀ cycloalkyl, substituted or unsubstituted C₁-C₁₀ alkylene C₅-C₃₀ cycloalkenyl, substituted or unsubstituted C₁-C₁₀ alkylene 5- to 30-membered heterocycloalkyl, substituted or unsubstituted C₁-C₁₀ alkylene 5- to 30-membered heterocycloalkenyl, substituted or unsubstituted C₁-C₁₀ alkylene C₆-C₃₀ aryl and substituted or unsubstituted C₁-C₁₀ alkylene 5- to 30-membered heteroaryl,
         or
      (B) the C atom bearing R_{b}, R_{c}, R_{d} and R_{b} form a substituted or unsubstituted C₆-C₃₀ aryl, or a substituted or unsubstituted 5- to 30-membered heteroaryl, and both R_{c} and R_{d} are none.
2. The poly(urea-urethane) polymer of embodiment 1, wherein R_{b}, R_{c}, and R_{d} independently of each other are selected from the group consisting of hydrogen, methyl, ethyl, propyl, iso-propyl, butyl, pentyl, hexyl, octyl, dodecyl, sec-butyl, tert-butyl, sec-isopentyl, 2-pentyl, 2-methyl-4-pentyl, 3-pentyl, 2-methyl-pentyl, 2,6-dimethyl-4-heptyl, 3-pinanyl-methyl, cyclopentyl, cyclohexyl, dicyclohexylmethyl, cyclohexylmethyl, cyclododecyl, phenyl, benzyl, cyclohexyl(phenyl)methyl, and -C(OH)H-Rₖ, wherein Rₖ is selected from the group consisting of hydrogen, linear or branched, substituted or unsubstituted C₁-C₃₀ alkyl, linear or branched, substituted or unsubstituted C₂-C₃₀ alkenyl, substituted or unsubstituted, linear or branched 2- to 30-membered heteroalkyl, substituted or unsubstituted, linear or branched 3- to 30-membered heteroalkenyl, substituted or unsubstituted C₅-C₃₀ cycloalkyl, substituted or unsubstituted C₅-C₃₀ cycloalkenyl, substituted or unsubstituted 5- to 30-membered heterocycloalkyl, substituted or unsubstituted 5- to 30-membered heterocycloalkenyl, substituted or unsubstituted C₆-C₃₀ aryl, substituted or unsubstituted 5- to 30-membered heteroaryl, substituted or unsubstituted C₁-C₁₀ alkylene C₅-C₃₀ cycloalkyl, substituted or unsubstituted C₁-C₁₀ alkylene C₅-C₃₀ cycloalkenyl, substituted or unsubstituted C₁-C₁₀ alkylene 5- to 30-membered heterocycloalkyl, substituted or unsubstituted C₁-C₁₀ alkylene 5- to 30-membered heterocycloalkenyl, substituted or unsubstituted C₁-C₁₀ alkylene C₆-C₃₀ aryl and substituted or unsubstituted C₁-C₁₀ alkylene 5- to 30-membered heteroaryl.
3. The poly(urea-urethane) polymer of embodiment 1 or 2, wherein R_{b} is a hydrogen atom and R_{c}, R_{d} are independently of each other are selected from the group consisting of methyl, ethyl, propyl, iso-propyl, butyl, pentyl, hexyl, octyl, dodecyl, sec-butyl, tert-butyl, sec-isopentyl, 2-pentyl, 2-methyl-4-pentyl, 3-pentyl, 2-methyl-pentyl, 2,6-dimethyl-4-heptyl, 3-pinanyl-methyl, cyclopentyl, cyclohexyl, dicyclohexylmethyl, cyclohexylmethyl, cyclododecyl, phenyl, benzyl, cyclohexyl(phenyl)methyl, and -C(OH)H-Rₖ.
4. The poly(urea-urethane) polymer of any one of embodiments 1 to 3, wherein R_{b} is a hydrogen atom and R_{c}, R_{d} are independently of each other are selected from the group consisting of methyl, ethyl, propyl, iso-propyl, butyl, pentyl, hexyl, octyl, dodecyl, sec-butyl, tert-butyl, sec-isopentyl, 2-pentyl, 2-methyl-4-pentyl, 3-pentyl, 2-methyl-pentyl, 2,6-dimethyl-4-heptyl, and 3-pinanyl-methyl.
5. The poly(urea-urethane) polymer of embodiment 1, wherein the C atom bearing R_{b}, R_{c}, R_{d} and R_{b} form a substituted or unsubstituted C₆-C₃₀ aryl, and both R_{c} and R_{d} are none, wherein the C₆-C₃₀ aryl is a C₆-C₁₂ aryl comprising one or more aromatic ring system(s), which are, in case of two or more rings systems, conjugated or isolated, wherein the C₆-C₁₂ aryl is preferably selected from the group consisting of phenyl, naphthyl, biphenyl, fluorenyl, and indyl.
6. The poly(urea-urethane) polymer of embodiment 1 or 5, wherein the C₆-C₃₀ aryl is unsubstituted or has at least one substituent selected from the group consisting of branched or straight C1 to C10 alkyl, wherein said at least one substituent is preferably not situated at a C atom of the C₆-C₃₀ aryl adjacent to the C atom forming the bond to NH.
7. The poly(urea-urethane) polymer of any one of embodiments 1 or 5 to 6, wherein the C₆-C₃₀ aryl is a phenyl ring, which preferably has hydrogen atoms at the C atoms adjacent to the C atom forming the bond to NH (ortho positions) and which preferably has at least one substituent at the meta and/or para position(s), which is selected from the group consisting of hydrogen atom and branched or straight C₁-C₁₀ alkyl group, more preferably from the group consisting of hydrogen atom and branched or straight C₁-C₅ alkyl group.
8. The poly(urea-urethane) polymer of any one of embodiments 1 to 7, wherein Rₐ is a substituted or unsubstituted, linear or branched C₁-C₃₀ alkylene, preferably a substituted or unsubstituted, linear C₁-C₃₀ alkylene, more preferably an unsubstituted linear C₁-C₁₀ alkylene.
9. The poly(urea-urethane) polymer of any one of embodiments 1 to 7, wherein Rₐ is -Z₁₂-, which is a substituted or unsubstituted 5- to 30-membered heterocycloalkyl(ene), wherein at least one of the one or more heteroatoms of Z₁₂ is from NH, Rₐ (Z₁₂) preferably being selected from the group consisting of aziridinyl(ene), pyrrolidinyl(ene), piperidinyl(ene), piperazinyl(ene), morpholinyl(ene), thiomorpholinyl(ene), tetrahydrofuranyl(ene), tetrahydrothiofuranyl(ene), tetrahydropyranyl(ene) and pyranyl(ene), more preferably piperidinyl(ene).
10. The poly(urea-urethane) polymer of any one of embodiments 1 to 9, wherein the at least one isocyanate (i) is a polyisocyanate having at least two isocyanate groups, preferably selected from the group consisting of monomeric methylene diphenylene diisocyanate (mMDI), polymethylene polyphenylene polyisocyanate (pMDI), a mixture of monomer methylene diphenylene diisocyanate and polymethylene polyphenylene polyisocyanate (MDI), tolylene diisocyanate (TDI), naphthylene 1,5-diisocyanate (1,5-NDI), 1,4-diisocyanate, pentane 1,5-diisocyanate (PDI), hexane 1,6-diisocyanate (HDI), methylene-bis(cyclohexyl isocyanate) (H12MDI) and a mixture of two or more thereof, more preferably selected from the group consisting of monomeric methylene diphenylene diisocyanate (mMDI), polymethylene polyphenylene polyisocyanate (pMDI), a mixture of monomer methylene diphenylene diisocyanate and polymethylene polyphenylene polyisocyanate (MDI) and tolylene diisocyanate (TDI).
11. The poly(urea-urethane) polymer of any one of embodiments 1 to 10, which is characterized in that it is (re-)formable at a pressure in the range of from 10³ to 10⁷ Pa, preferably in the range of from 1.5 x 10³ to 10⁶ Pa; and/or, preferably and, at a temperature in the range of from 60 °C to a temperature below the decomposition temperature of the respective poly(urea-urethane) polymer, preferably in the range of from 60 to 200 °C, more preferably in the range of from 70 to 150 °C.
12. The poly(urea-urethane) polymer of any one of embodiments 1 to 11, wherein (i) and (ii) are reacted in the presence of less than 1 weight-%, preferably of less than 0.5 weight-%, more preferably of less than 0.1 weight-%, of a polyol, based on the sum of the weight-% of (i) and (ii) being 100 weight-%, more preferably (i) and (ii) are reacted in the absence of a polyol.
13. The poly(urea-urethane) polymer of any one of embodiments 1 to 12, wherein (i) and (ii) are reacted in the presence of a catalyst, preferably an organometallic catalyst, which is more preferably selected from the group consisting of tin, titanium, zirconium, hafnium, bismuth, zinc, aluminum and iron organyl, wherein the catalyst is more preferably a tin organyl compound, preferably preferably selected from the group consisting of tin dialkyl, such as dimethyltin or diethyltin, tin organyl compound of aliphatic carboxylic acid, preferably selected from tin diacetate, tin dilaurate, dibutyltin diacetate, dibutyltin dilaurate, tin isooctoate, tin dioctoate, and mixtures of two or more thereof.
14. The poly(urea-urethane) polymer of any one of embodiments 1 to 12, wherein (i) and (ii) are reacted in the presence of a catalyst, which is selected from the group consisting of tertiary amine, alkanolamine and mixtures of tertiary amine and alkanolamine, wherein the tertiary amine is preferably selected from the group consisting of triethylamine, tributylamine, dimethylbenzylamin, dicyclohexylmethylamin, dimethylcyclohexylamine, N,N,N',N'-tetramethyldiaminodiethylether, bis-(dimethylaminopropyl)-urea, N-methyl-morpholin, N-ethylmorpholin, N-cyclohexyl-morpholin, N,N,N',N'-tetrame¬thylethylendiamine, N,N,N,N-tetramethylbutandiamine, N,N,N,N-tetramethylhexandiamine-1,6, pentamethyldiethylentriamine, bis(2-dimethylaminoethyl)ether, dimethylpiperazin, N-dimethyl¬aminoethylpiperidin, 1,2-dimethylimidazol, 1-azabicyclo-(2,2,0)-octane, 1,4-diazabicyclo.¬(2,2,2).octane (Dabco), triethylendiamine, and mixtures of two or more of these tertiary amines; and the alkanolamine is preferably from the group consisting of triethanolamine, triisopropanolamine, N-methyl diethanolamine, N-ethyl diethanolamine, dimethylaminoethanol, 2-(N,N-dimethylaminoethoxy)¬ethanol, N,N',N"-tris-(dialkylaminoalkyl)hexahydrotriazine (preferably N,N',N"-tris-(dimethylamino-propyl)-s-hexahydrotriazin), and mixtures of two or more of these alkanolamines.
15. The poly(urea-urethane) polymer of any one of embodiments 1 to 12, wherein (i) and (ii) are reacted in the absence of a catalyst, preferably in the absence of a catalyst selected from the group consisting of organometallic catalyst, tertiary amine and alkanolamine, more preferably less than 100 ppm of a catalyst, more preferably less than 100 ppm of a catalyst selected from the group consisting of organometallic catalyst, tertiary amine and alkanolamine are present, based on the weight of isocyanate (i) being 100 weight-%.
16. The poly(urea-urethane) polymer of any one of embodiments 1 to 15, wherein (i) and (ii) are reacted in the presence of a solvent, wherein the solvent is preferably one or more organic aprotic solvent, more preferably selected from the group consisting of 1,3-dimethyl-2-imidazolidinon (DMI); dichlorobenzene, preferably 1,2-dichlorobenzene, 1, 2, 3-trichlorobenzene; 1, 2, 4- trichlorobenzene,1,3,5-trichlorobenzene, sulfolane (tetrahydrothiophen-1,1-dioxide), dichloromethane (DCM), chloroform, di(C₁-C₅ alkyl)ether, dimethylformamide (DMF), acetonitrile, dimethyl sulfoxide, benzene, toluene, xylene, mesitylene, N-methyl pyrrolidone, dioxane, tetrahydrofuran, butyl acetate, propyl acetate, ethyl acetate, 4-formylmorpholine, tertbutylpyrrolidin-2-on, n-butylpyrrolidin-2-on, and mixtures of two or more of these solvents.
17. The poly(urea-urethane) polymer of any one of embodiments 1 to 16, wherein (i) and (ii) are reacted in the absence of water, wherein preferably less than 0.01 weight-%, more preferably less than 0.005 weight-%, more preferably less than 0.002 weight-% of water are present, based on the total weight of the solvent being 100 weight-%.
18. The poly(urea-urethane) polymer of any one of embodiments 1 to 17, wherein (i) and (ii) are reacted in a protective atmosphere, more preferably an inert gas atmosphere, wherein the inert gas is preferably selected from the group consisting of helium, neon, argon, krypton, radon, xenon, nitrogen and mixtures of two or more of these inert gases.
19. A method for preparing a poly(urea-urethane) polymer, preferably a poly(urea-urethane) polymer according to any one of embodiments 1 to 18, the method comprising:
   (a) providing at least one isocyanate (i);
   (b) providing at least one compound (ii) comprising a hydroxyl group and a secondary amino group having the following formula (I) 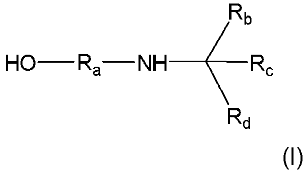
      wherein -Rₐ- is selected from the group consisting of -Z₁-, -Z₂-, -Z₃-, -Z₄-, -Z₅-, - Z₆-, -Z₇-, -Z₇-, -Z₈-, -Z₉-, -Z₁₀-, -Z₁₂-, -Z₁-Z₅-, -Z₅-Z₁-Z₅-, -Z₁-Z₆-, -Z₁-Z₇-, -Z₁-Z₈-, -Z₁-Z₉-, -Z₉-Z₁-Z₉-, -Z₁-Z₁₀-, -Z₃-Z₅-, -Z₃-Z₆-, -Z₃-Z₇-, -Z₃-Z₈-, -Z₃-Z₉-, - Z₃-Z₁₀-, -Z₁-Z₅-Z₁-, -Z₁-Z₉-Z₁-, -Z₁-Z₁₂-and -Z₁-Z₁₁-Z₁-, wherein
      -Z₁- is a substituted or unsubstituted, linear or branched C₁-C₃₀ alkylene;
      -Z₂- is a substituted or unsubstituted, linear or branched 2- to 300,000-membered heteroalkylene;
      -Z₃- is a substituted or unsubstituted, linear or branched C₂-C₃₀ alkenylene;
      -Z₄- is a substituted or unsubstituted, linear or branched 3- to 30-membered heteroalkenylene;
      -Z₅- is a substituted or unsubstituted C₅-C₃₀ cycloalkylene;
      -Z₆- is a substituted or unsubstituted 5- to 30-membered heterocycloalkylene;
      -Z₇- is a substituted or unsubstituted C₅-C₃₀ cycloalkenylene;
      -Z₈- is a substituted or unsubstituted 5- to 30-membered heterocycloalkenylen;
      -Z₉- is a substituted or unsubstituted C₆-C₃₀ arylene, preferably with one substituent selected from hydrogen atom, -NHR or -OR, wherein is selected from the group consisting of H and substituted or unsubstituted, linear or branched C₁-C₁₀ alkyl;
      -Z₁₀- is a substituted or unsubstituted 5- to 30-membered heteroarylene;
      -Z₁₁- is-N(R_{c'})-;
      -Z₁₂- is a substituted or unsubstituted 5- to 30-membered heterocycloalkylene, wherein at least one of the one or more heteroatoms of Z₁₂ is from NH (the NH located between Rₐ and the C atom bearing R_{b}, R_{c}, R_{d});
      wherein
      (A) Rb, R_{c}, R_{d} independently of each other are selected from the group consisting of hydrogen, linear or branched, substituted or unsubstituted C₁-C₃₀ alkyl, linear or branched, substituted or unsubstituted C₂-C₃₀ alkenyl, substituted or unsubstituted, linear or branched 2- to 30-membered heteroalkyl, substituted or unsubstituted, linear or branched 3- to 30-membered heteroalkenyl, substituted or unsubstituted C₅-C₃₀ cycloalkyl, substituted or unsubstituted C₅-C₃₀ cycloalkenyl, substituted or unsubstituted 5- to 30-membered heterocycloalkyl, substituted or unsubstituted 5- to 30-membered heterocycloalkenyl, substituted or unsubstituted C₆-C₃₀ aryl, substituted or unsubstituted 5- to 30-membered heteroaryl, substituted or unsubstituted C₁-C₁₀ alkylene C₅-C₃₀ cycloalkyl, substituted or unsubstituted C₁-C₁₀ alkylene C₅-C₃₀ cycloalkenyl, substituted or unsubstituted C₁-C₁₀ alkylene 5- to 30-membered heterocycloalkyl, substituted or unsubstituted C₁-C₁₀ alkylene 5- to 30-membered heterocycloalkenyl, substituted or unsubstituted C₁-C₁₀ alkylene C₆-C₃₀ aryl and substituted or unsubstituted C₁-C₁₀ alkylene 5- to 30-membered heteroaryl,
         or
      (B) the C atom bearing R_{b}, R_{c}, R_{d} and R_{b} form a substituted or unsubstituted C₆-C₃₀ aryl, or a substituted or unsubstituted C5-C30 heteroaryl and both R_{c} and R_{d} are none;
   (c) reacting the at least one isocyanate (i) according to (a) and the at least one compound (ii) according to (b) with each other, thereby forming a poly(urea-urethane) polymer.
20. The method for preparing a poly(urea-urethane) polymer of embodiment 19, wherein R_{b}, R_{c}, and R_{d} independently of each other are selected from the group consisting of hydrogen, methyl, ethyl, propyl, iso-propyl, butyl, pentyl, hexyl, octyl, dodecyl, sec-butyl, tert-butyl, sec-isopentyl, 2-pentyl, 2-methyl-4-pentyl, 3-pentyl, 2-methyl-pentyl, 2,6-dimethyl-4-heptyl, 3-pinanyl-methyl, cyclopentyl, cyclohexyl, dicyclohexylmethyl, cyclohexylmethyl, cyclododecyl, phenyl, benzyl, cyclohexyl(phenyl)methyl, and -C(OH)H-Rₖ, wherein Rₖ is selected from the group consisting of hydrogen, linear or branched, substituted or unsubstituted C₁-C₃₀ alkyl, linear or branched, substituted or unsubstituted C₂-C₃₀ alkenyl, substituted or unsubstituted, linear or branched 2- to 30-membered heteroalkyl, substituted or unsubstituted, linear or branched 3- to 30-membered heteroalkenyl, substituted or unsubstituted C₅-C₃₀ cycloalkyl, substituted or unsubstituted C₅-C₃₀ cycloalkenyl, substituted or unsubstituted 5- to 30-membered heterocycloalkyl, substituted or unsubstituted 5- to 30-membered heterocycloalkenyl, substituted or unsubstituted C₆-C₃₀ aryl, substituted or unsubstituted 5- to 30-membered heteroaryl, substituted or unsubstituted C₁-C₁₀ alkylene C₅-C₃₀ cycloalkyl, substituted or unsubstituted C₁-C₁₀ alkylene C₅-C₃₀ cycloalkenyl, substituted or unsubstituted C₁-C₁₀ alkylene 5- to 30-membered heterocycloalkyl, substituted or unsubstituted C₁-C₁₀ alkylene 5- to 30-membered heterocycloalkenyl, substituted or unsubstituted C₁-C₁₀ alkylene C₆-C₃₀ aryl and substituted or unsubstituted C₁-C₁₀ alkylene 5-to 30-membered heteroaryl.
21. The method for preparing a poly(urea-urethane) polymer of embodiment 19 or 20, wherein R_{b} is a hydrogen atom and R_{c}, R_{d} are independently of each other are selected from the group consisting of methyl, ethyl, propyl, iso-propyl, butyl, pentyl, hexyl, octyl, dodecyl, sec-butyl, tert-butyl, sec-isopentyl, 2-pentyl, 2-methyl-4-pentyl, 3-pentyl, 2-methyl-pentyl, 2,6-dimethyl-4-heptyl, 3-pinanyl-methyl, cyclopentyl, cyclohexyl, dicyclohexylmethyl, cyclohexylmethyl, cyclododecyl, phenyl, benzyl, cyclohexyl(phenyl)methyl, and -C(OH)H-Rₖ.
22. The method for preparing a poly(urea-urethane) polymer of any one of embodiments 19 to 21, wherein R_{b} is a hydrogen atom and R_{c}, R_{d} are independently of each other are selected from the group consisting of methyl, ethyl, propyl, iso-propyl, butyl, pentyl, hexyl, octyl, dodecyl, sec-butyl, tert-butyl, sec-isopentyl, 2-pentyl, 2-methyl-4-pentyl, 3-pentyl, 2-methyl-pentyl, 2,6-dimethyl-4-heptyl, and 3-pinanyl-methyl.
23. The method for preparing a poly(urea-urethane) polymer of embodiment 19, wherein the C atom bearing R_{b}, R_{c}, R_{d} and R_{b} form a substituted or unsubstituted C₆-C₃₀ aryl, and both R_{c} and R_{d} are none, wherein the C₆-C₃₀ aryl is a C₆-C₁₂ aryl comprising one or more aromatic ring system(s), which are, in case of two or more rings systems, conjugated or isolated, wherein the C₆-C₁₂ aryl is preferably selected from the group consisting of phenyl, naphthyl, biphenyl, fluorenyl, and indyl.
24. The method for preparing a poly(urea-urethane) polymer of embodiment 19 or 23, wherein the C₆-C₃₀ aryl is unsubstituted or has at least one substituent selected from the group consisting of branched or straight C1 to C10 alkyl, wherein said at least one substituent is preferably not situated at a C atom of the C₆-C₃₀ aryl adjacent to the C atom forming the bond to NH.
25. The method for preparing a poly(urea-urethane) polymer of any one of embodiments 19 or 23 to 24, wherein the C₆-C₃₀ aryl is a phenyl ring, which preferably has hydrogen atoms at the C atoms adjacent to the C atom forming the bond to NH (ortho positions) and which preferably has at least one substituent at the meta and/or para position(s), which is selected from the group consisting of hydrogen atom and branched or straight C₁-C₁₀ alkyl group, more preferably from the group consisting of hydrogen atom and branched or straight C₁-C₅ alkyl group.
26. The method for preparing a poly(urea-urethane) polymer of any one of embodiments 19 to 25, wherein Rₐ is a substituted or unsubstituted, linear or branched C₁-C₃₀ alkylene, preferably a substituted or unsubstituted, linear C₁-C₃₀ alkylene, more preferably an unsubstituted linear C₁-C₁₀ alkylene.
27. The method for preparing a poly(urea-urethane) polymer of embodiment 19, wherein Rₐ is -Z₁₂-, which is a substituted or unsubstituted 5- to 30-membered heterocycloalkyl(ene), wherein at least one of the one or more heteroatoms of Z₁₂ is from NH, Rₐ (Z₁₂) preferably being selected from the group consisting of aziridinyl(ene), pyrrolidinyl(ene), piperidinyl(ene), piperazinyl(ene), morpholinyl(ene), thiomorpholinyl(ene), tetrahydrofuranyl(ene), tetrahydrothiofuranyl(ene), tetrahydropyranyl(ene) and pyranyl(ene), more preferably piperidinyl(ene).
28. The method for preparing a poly(urea-urethane) polymer of any one of embodiments 19 to 27, wherein the at least one isocyanate (i) is a polyisocyanate having at least two isocyanate groups, preferably selected from the group consisting of monomeric methylene diphenylene diisocyanate (mMDI), polymethylene polyphenylene polyisocyanate (pMDI), a mixture of monomer methylene diphenylene diisocyanate and polymethylene polyphenylene polyisocyanate (MDI), tolylene diisocyanate (TDI), naphthylene 1,5-diisocyanate (1,5-NDI), 1,4-diisocyanate, pentane 1,5-diisocyanate (PDI), hexane 1,6-diisocyanate (HDI), methylene-bis(cyclohexyl isocyanate) (H12MDI) and a mixture of two or more thereof, more preferably selected from the group consisting of monomeric methylene diphenylene diisocyanate (mMDI), polymethylene polyphenylene polyisocya-nate (pMDI), a mixture of monomer methylene diphenylene diisocyanate and polymethylene polyphenylene polyisocyanate (MDI) and tolylene diisocyanate (TDI).
29. The method for preparing a poly(urea-urethane) polymer of any one of embodiments 19 to 28, wherein (i) and (ii) are reacted in the presence of less than 1 weight-%, preferably of less than 0.5 weight-%, more preferably of less than 0.1 weight-%, of a polyol, based on the sum of the weight-% of (i) and (ii) being 100 weight-%, more preferably (i) and (ii) are reacted in the absence of a polyol.
30. The method for preparing a poly(urea-urethane) polymer of any one of embodiments 19 to 29, wherein (i) and (ii) are reacted in the presence of a catalyst, preferably an organometallic catalyst, which is more preferably selected from the group consisting of tin, titanium, zirconium, hafnium, bismuth, zinc, aluminum and iron organyl, wherein the catalyst is more preferably a tin organyl compound, preferably preferably selected from the group consisting of tin dialkyl, such as dimethyltin or diethyltin, tin organyl compound of aliphatic carboxylic acid, preferably selected from tin diacetate, tin dilaurate, dibutyltin diacetate, dibutyltin dilaurate, tin isooctoate, tin dioctoate, and mixtures of two or more thereof.
31. The method for preparing a poly(urea-urethane) polymer of any one of embodiments 19 to 29, wherein (i) and (ii) are reacted in the presence of a catalyst, which is selected from the group consisting of tertiary amine, alkanolamine and mixtures of tertiary amine and alkanolamine, wherein the tertiary amine is preferably selected from the group consisting of triethylamine, tributylamine, dimethylbenzylamin, dicyclohexylmethylamin, dimethylcyclohexylamine, N,N,N',N'-tetramethyldiaminodiethylether, bis-(dimethylaminopropyl)-urea, N-methyl-morpholin, N-ethylmorpholin, N-cyclohexyl-morpholin, N,N,N',N'-tetrame¬thylethy-lendiamine, N,N,N,N-tetramethylbutandiamine, N,N,N,N-tetramethylhexandiamine-1,6, pentamethyldiethylentriamine, bis(2-dimethylaminoethyl)ether, dimethylpiperazin, N-dimethyl¬aminoethylpiperidin, 1,2-dimethylimidazol, 1-azabicyclo-(2,2,0)-octane, 1,4-diazabicyclo.¬(2,2,2).octane (Dabco), triethylendiamine, and mixtures of two or more of these tertiary amines; and the alkanolamine is preferably from the group consisting of triethanolamine, triisopropanolamine, N-methyl diethanolamine, N-ethyl diethanolamine, dimethylaminoethanol, 2-(N,N-dimethylaminoethoxy)¬ethanol, N,N',N"-tris-(dialkylaminoalkyl)hexahydrotriazine (preferably N,N',N"-tris-(dimethylamino-propyl)-s-hexahydrotriazin), and mixtures of two or more of these alkanolamines.
32. The method for preparing a poly(urea-urethane) polymer of any one of embodiments 19 to 29, wherein (i) and (ii) are reacted in the absence of a catalyst, preferably in the absence of a catalyst selected from the group consisting of organometallic catalyst, tertiary amine and alkanolamine, more preferably less than 100 ppm of a catalyst, more preferably less than 100 ppm of a catalyst selected from the group consisting of organometallic catalyst, tertiary amine and alkanolamine are present, based on the weight of isocyanate (i) being 100 weight-%.
33. The method for preparing a poly(urea-urethane) polymer of any one of embodiments 19 to 32, wherein (i) and (ii) are reacted in the presence of a solvent, wherein the solvent is preferably one or more organic aprotic solvent, more preferably selected from the group consisting of 1,3-dimethyl-2-imidazolidinon (DMI); dichlorobenzene, preferably 1,2-dichlorobenzene, 1, 2, 3-trichlorobenzene; 1, 2, 4- trichlorobenzene,1,3,5-trichlorobenzene, sulfolane (tetrahydrothiophen-1,1-dioxide), dichloromethane (DCM), chloroform, di(C1-C5 alkyl)ether, dimethylformamide (DMF), acetonitrile, dimethyl sulfoxide, benzene, toluene, xylene, mesitylene, N-methyl pyrrolidone, dioxane, tetrahydrofuran, butyl acetate, propyl acetate, ethyl acetate, 4-formylmorpholine, tertbutylpyrrolidin-2-on, n-butylpyrrolidin-2-on, and mixtures of two or more of these solvents.
34. The method for preparing a poly(urea-urethane) polymer of any one of embodiments 19 to 33, wherein (i) and (ii) are reacted in the absence of water, wherein preferably less than 0.01 weight-%, more preferably less than 0.005 weight-%, more preferably less than 0.002 weight-% of water are present, based on the total weight of the solvent being 100 weight-%.
35. The method for preparing a poly(urea-urethane) polymer of any one of embodiments 19 to 34, wherein (i) and (ii) are reacted in a protective atmosphere, more preferably an inert gas atmosphere, wherein the inert gas is preferably selected from the group consisting of helium, neon, argon, krypton, radon, xenon, nitrogen and mixtures of two or more of these inert gases.
36. The method for preparing a poly(urea-urethane) polymer according to any one of embodiments 19 to 35, wherein reacting according to (c) is done at a temperature in the range of from 0 to 200 °C, preferably in the range of from 1 to 200 °C, more preferably in the range of from 10 to 150 °C, more preferably in the range of from 20 to 90 °C.
37. The method for preparing a poly(urea-urethane) polymer according to any one of embodiments 19 to 36 wherein the molar ratio of NCO in the isocyanate (i) to the sum of the functionalities of OH and NH of the compound (ii) is in the range of from 1 : 100 to 100 : 1, preferably in the range of from 1 : 10 to 10 : 1.
38. A process for (re)shaping a poly(urea-urethane) polymer, preferably a poly(urea-urethane) polymer according to any one of embodiments 1 to 18 or a poly(urea-urethane) polymer obtainable or obtained by a method according to any one of embodiments 19 to 37 comprising:
   shaping the poly(urea-urethane) polymer, wherein shaping the polymer comprises
   (x) applying pressure and heat to the poly(urea-urethane) polymer, thereby obtaining an at least partially melted poly(urea-urethane) polymer;
   (x') shaping the at least partially melted poly(urea-urethane) polymer of (x), thereby obtaining a shaped body of the poly(urea-urethane) polymer.
39. The process of embodiment 38, wherein the applied pressure according to (x) is in the range of from 10³ to 10⁷ Pa, preferably in the range of from 1.5 x 10³ to 10⁶ Pa.
40. The process of embodiment 38 or 39, wherein the applied heat according to (x) is in the range of from 60 °C to a temperature below the decomposition temperature of the respective poly(urea-urethane) polymer, preferably in the range of from 60 to 200 °C, more preferably in the range of from 70 to 150 °C.
41. An article comprising the poly(urea-urethane) polymer according to any one of embodiments 1 to 18, or of the poly(urea-urethane) polymer obtained or obtainable from the method of any one of embodiments 19 to 37.
42. The article of embodiment 39, which is characterized in that it is (re-)formable at a pressure in the range of from 10³ to 10⁷ Pa, preferably in the range of from 1.5 x 10³ to 10⁶ Pa; and/or, preferably and, at a temperature in the range of from 60 °C to a temperature below the decomposition temperature of the respective poly(urea-urethane) polymer, preferably in the range of from 60 to 200 °C, more preferably in the range of from 70 to 150 °C.
43. Use of the article of embodiment 41 or 42 or of the poly(urea-urethane) polymer according to any one of embodiments 1 to 18, or of the poly(urea-urethane) polymer obtained or obtainable from the method of any one of embodiments 19 to 37 as a recyclable material, preferably for preparation of a coating, healable coating, recyclable rigid foam, recyclable flexible foam, part for the automotive industry, rigid foam insulation, durable elastomeric wheel, durable elastomeric tire, adhesive, surface coating, surface sealant, synthetic fiber, carpet underlay or a hard plastic part.

The following definitions apply to all five aspects of the present invention as described above, i.e. the following definitions apply explicitly for the poly(urea-urethane) polymer of the first aspect, for the method for preparing a poly(urea-urethane) polymer of the second aspect of the invention, the process for (re)shaping a poly(urea-urethane) polymer of the third aspect of the invention, the article of the fourth aspect of the invention and also for the use according to the fifth aspect:

### alkylene

In the context of the present invention, the term "alkylene" relates to acyclic saturated hydrocarbon groups, which may be acyclic saturated hydrocarbon chains, which combine different moieties, as in the case of C₁-C₃₀ alkylene with 1 to 30 (i.e. 1, 2, 3, 4, 5, 6, 7, 8, 9, 10, 11, 12, 13, 14, 15, 16, 17, 18, 19, 20, 21, 22, 23, 24, 25, 26, 27, 28, 29 or 30) C atoms or with, as in the case of C₁-C₅ alkylene, 1 to 5 (i.e. 1, 2, 3, 4 or 5) C atoms. Representative examples of alkylene include, but are not limited to, -CH₂-, -CH₂-CH₂-, -CH₂-CH(CH₃)-, -CH(CH₃)-CH₂-, -CH(CH₃)-CH₂-CH₂-, -CH₂-CH(CH₂CH₃)-, -CH₂-CH₂-CH(CH₂CH₃)-, -CH₂-CH(n-C₃H₇)-, -CH₂-CH(n-C₄H₉)-, -CH₂-CH(n-C₅H₁₁)-, -CH₂-CH(n-C₆H₁₃)-, -CH₂-CH(n-C₇H₁₅)-, -CH₂-CH(n-C₈H₁₇)-, -CH(CH₃)-CH(CH₃)-,-C(CH₃)₂-, -CH₂-C(CH₃)₂-CH₂-,-CH₂-[C(CH₃)₂]₂-CH₂-, -CH₂-CH(CH₃)-CH₂-C(CH₃)₂-CH₂-CH₂-, -CH₂-C(CH₃)₂-CH₂-CH(CH₃)-CH₂-CH₂-, -(CH₂)₃-, -(CH₂)₄-, -(CH₂)₅-, - (CH₂)₆-, -(CH₂)₈-, -(CH₂)₁₀-, -(CH₂)₇-, -(CH₂)₉-, -(CH₂)₁₁-, -(CH₂)₁₂-, -(CH₂)₁₃-, -(CH₂)₁₄-, - (CH₂)₁₅-, -(CH₂)₁₆-, -(CH₂)₁₇-, -(CH₂)₁₈-, -(CH₂)₁₉-, -(CH₂)₂₀-, -(CH₂)₂₁-, -(CH₂)₂₂-, -(CH₂)₂₃-, - (CH₂)₂₄-, -(CH₂)₂₅-, -(CH₂)₂₆-, -(CH₂)₂₇-, -(CH₂)₂₈-, -(CH₂)₂₉- and -(CH₂)₃₀-.

### heteroalkylene

In the context of the present invention, the term "heteroalkylene" relates to an alkylene group as described above, in which one or more carbon atoms have been replaced with heteroatoms each independently selected from the group consisting of oxygen, sulfur and nitrogen (-NH-). The heteroalkylene groups can preferably have 1, 2 or 3 heteroatom (s), particularly preferably 1 heteroatom selected from the group consisting of oxygen, sulfur and nitrogen (-NH-) as chain link(s). The heteroalkylene groups can preferably be 2- to 30-membered, particularly preferably 2- to 12-membered, very particularly preferably 2- or 6- membered. More preferably, oxygen (-O-) is the most preferred heteroatom in "heteroalkylene". Representative examples of the heteroalkylene groups include, but are not limited to, (-CH₂-O-CH₂-)₁₋₅₀₀, (-CH₂-O-CH(CH₃)-)₁₋₅₀₀, -(CH(CH₃)-CH₂-O)₁₋₁₀₀-CH(CH₃)-CH₂-, -CH₂-CH₂-O-CH₂-CH₂-, -CH₂-O-CH(CH₃)-, -CH₂-O-CH(CH₂CH₃)-, -CH₂-O-CH(n-C₃H₇)-, -CH₂-O-CH(n-C₄H₉)-, -CH₂-O-CH(n-C₅H₁₁)-, -CH₂-O-CH(n-C₆H₁₃)-, -CH₂-O-CH(n-C₇H₁₅)-, -CH₂-O-CH(n-C₈H₁₇)-, -CHO-(CH₃)-CHO-(CH₃)-, -CO-(CH₃)₂-, -CH₂-O-C(CH₃)₂-CH₂-, -CH₂-[O-C(CH₃)₂]₂-CH₂-, -(CH₂)₃-O-CH₂-, -(CH₂)₄-O-CH₂-, -(CH₂)₅-O-CH₂-, -(CH₂)₆-O-CH₂-, -(CH₂)₈-OCH₂-, -(CH₂)₁₀-O-CH₂-, -(CH₂)₇-O-CH₂-, - (CH₂)₉-O-CH₂-, -(CH₂)₁₁-O-CH₂-, -(CH₂)₁₂-O-CH₂-, -(CH₂)₁₃-O-CH₂-, -(CH₂)₁₄-O-CH₂-, - (CH₂)₁₅-O-CH₂-, -(CH₂)₁₆-O-CH₂-, -(CH₂)₁₇-O-CH₂-, -(CH₂)₁₈-O-CH₂-, -(CH₂)₁₉-O-CH₂-, - (CH₂)₂₀-O-CH₂-, -(CH₂)₂₁-OCH₂-, -(CH₂)₂₂-OCH₂-, -(CH₂)₂₃-O-CH₂-, -(CH₂)₂₄-OCH₂-, - (CH₂)₂₅-OCH₂-, -(CH₂)₂₆-OCH₂-, -(CH₂)₂₇-O-CH₂-, -(CH₂)₂₈-O-CH₂-, -(CH₂)₂₉-O-CH₂-, - (CH₂)₃₀-O-CH₂-, -CH₂-S-CH₂-, -CH₂-NH-CH₂-, -CH₂-NH-,-CH₂-CH₂-NH-CH₂-CH₂-CH₂-, - CH₂-CH₂-CH₂-N(CH₃)-CH₂-CH₂-CH₂-, -CH₂-CH₂-CH₂-NH-CH₂-CH₂-CH₂-, -CH₂-CH₂-CH₂-N H-CH₂-CH₂-NH-CH₂-CH₂-CH₂-, -CH₂-CH₂-NH-CH₂-CH₂-N H-CH₂-CH₂-, -CH₂-CH₂-NH-CH₂-CH₂-NH-CH₂-CH₂-N H-CH₂-CH₂-, -CH₂-CH₂-CH₂-O-CH₂-CH₂-O-CH₂-CH₂-O-CH₂-CH₂-CH₂-, -CH₂-CH₂-CH₂-O-CH₂-CH₂-CH₂-CH₂-O-CH₂-CH₂-CH₂-, -CH₂-CH₂-O-CH₂-CH₂-O-CH₂-CH₂-, -CH(CH₃)-CH₂-NH-CH₂-CH(CH₃)-,-CH₂-CH₂-NH-CH₂-CH₂-, -[CH(CH₃)-CH₂-O]ₘ₁-CH₂-C(Rₓ₁)(R_{y1})-[O-CH₂-CH(CH₃)]ₒ₁-, wherein Rₓ₁ is -CH₂-CH₃, wherein R_{y1} is [-O-CH₂-CH(CH₃)]ₙ₁-NH-C_{d}(Rₗ)(Rₘ)(Rₙ), and wherein m1+n1+o1 is in the range of 5 to 6, -[CH(CH₃)-CH₂-O]ₘ₂-CH₂-CH(R_{y2})-[O-CH₂-CH(CH₃)]ₒ₂-, wherein R_{y2} is [-O-CH₂-CH(CH₃)]ₙ₂-NH- C_{d}(Rₗ)(Rₘ)(Rₙ), and wherein m2+n2+o2 is in the range of 45 to 85, -[CH(CH₃)-CH₂-O]ₘ₃-[CH₂-CH₂-O]ₙ₃-[CH₂-CH(CH₃)-O]ₒ₃-CH₂-CH(CH)₃-,
wherein n3 is in the range of 8 to 10 and m3+o3 is in the range of 3 to 4, or
wherein n3 is in the range of 12 to 13 and m3+o3 is in the range of 5 to 7, or
wherein n3 is in the range of 38 to 40 and m3+o3 is in the range of 5 to 7,
-[CH-CH₂-O]ₘ₄-CH₂-CH₂-, wherein m4 is in the range of 8 to 250, and
-[CH₂-CH₂-NH]ₘ₅-, wherein m5 is in the range of 10 to 100,000.

### alkenylene

In the context of the present invention, the term "alkenylene" relates to acyclic unsaturated hydrocarbon groups having at least one double bond, preferably 1, 2 or 3 double bonds, and may be branched or linear and unsubstituted or at least monosubstituted with as in the case of C₂-C₃₀ alkenylene 2 to 30 (i.e. 2, 3 , 4, 5, 6, 7, 8, 9, 10, 11, 12, 13, 14, 15, 16, 17, 18, 19, 20, 21, 22, 23, 24, 25, 26, 27, 28, 29 or 30) C-atoms, more preferably C₂-C₂₀ alkenylene, most preferably C₂-C₁₀ alkenylene , and in particular C₂-C₆ alkenylene. Representative examples of alkenylene include, but are not limited to, -CH=CH- and -CH₂-CH=CH-.

### heteroalkenylene

In the context of the present invention, the term "heteroalkenylene" relates to an alkenylene group as described above, in which one or more carbon atoms have been replaced with heteroatoms each independently selected from the group consisting of oxygen, sulfur and nitrogen (NH). The heteroalkenylene groups can preferably have 1, 2 or 3 heteroatom (s), particularly preferably 1 heteroatom selected from the group consisting of oxygen, sulfur and nitrogen (NH) as chain link(s). The heteroalkenylene groups can preferably be 3- to 30-membered, particularly preferably 3- to 12-membered, very particularly preferably 3- or 6- membered. Representative examples of the heteroalkenylene groups include, but are not limited to, -CH=CH-NH-, -CH=CH-O-, - CH=CH-CH₂-O- and -CH=CH-S-.

### Substituted (regarding alkylene, alkenylene, heteroalkylene and heteroalkenylene)

In the context of the present invention, it is conceivable that if one or more of the substituents denote an alkylene, alkenylene, heteroalkylene and heteroalkenylene or comprises such a group, which is mono- or polysubstituted, this group is preferably substituted with 1, 2, 3, 4 or 5, particularly preferably with 1, 2 or 3, substituents mutually independently selected from the group consisting of phenyl, F, Cl, Br, I,-OH, -NO₂, -CN, -O-phenyl, -O-CH₂-phenyl, -SH, -S-phenyl, -S-CH₂-phenyl, -NH₂, -N(C₁₋₅-alkyl)₂, -NH-phenyl, -N(C₁₋₅-alkyl)(phenyl), -N(C₁₋₅-alkyl)(CH₂-phenyl), -N(C₁₋₅-alkyl)(CH₂-CH₂-phenyl), -C(=O)-H, -C(=O)-C₁₋₅-alkyl, -C(=O)-phenyl, -C(=S)-C₁₋₅-alkyl, -C(=S)-phenyl, -C(=O)-OH, -C(=O)-O-C₁₋₅-alkyl, -C(=O)-O-phenyl, -C(=O)-NH₂,-C(=O)-NH-C₁₋₅-alkyl, -C(=O)-N(C₁₋₅-alkyl)₂, -S(=O)-C₁₋₅-alkyl, -S(=O)-phenyl, -S(=O)₂-C₁₋₅-alkyl, -S(=O)₂-phenyl, -S(=O)₂-NH₂ and -SO₃H, wherein the above-stated -C₁₋₅ alkyl residues in each case are linear or branched and the above-stated phenyl residues are unsubstituted or substituted with 1, 2, 3, 4 or 5, preferably with 1, 2, 3 or 4, substituents mutually independently selected from the group consisting of F, Cl, Br, I, -OH, -CN, -NO₂, -SH, -NH₂, -C(=O)-OH, -C₁₋₅ alkyl, -(CH₂)-O-C₁₋₅-alkyl, -C₂₋₅ alkenyl, -C₂₋₅ alkynyl, -C≡C-Si(CH₃)₃, -C≡C-Si(C₂H₅)₃, -S-C₁₋₅-alkyl, -S-phenyl, -S-CH₂-phenyl, -O-C₁₋₅-alkyl, -O-phenyl, -O-CH₂-phenyl, -CF₃, -CHF₂,-CH₂F, -O-CF₃, -O-CHF₂, -O-CH₂F, -C(=O)-CF₃, -S-CF₃, -S-CHF₂ and -S-CH₂F. It is conceivable that alkylene, alkenylene, heteroalkylene and heteroalkenylene groups are independently from one another unsubstituted or substituted with 1, 2 or 3 substituents mutually independently selected from the group consisting of phenyl, F, Cl, Br, I, -OH, -NO₂, -CN, -O-phenyl, -SH, -S-phenyl, -NH₂, -N(CH₃)₂, -N(C₂H₅)₂ and -N(CH₃)(C₂H₅), wherein the phenyl residue are unsubstituted or substituted with 1, 2, 3, 4 or 5 substituents mutually independently selected from the group consisting of F, Cl, Br, I, -OH, -SH, -NO₂, -NH₂, -CN, -O-CH₃, -O-CF₃, and -O-C₂H₅.

### cycloalkylene

In the context of the present invention, the term "cycloalkylene" relates to saturated cyclic hydrocarbon groups. Representative examples of C₅-C₃₀ cycloalkylene include, but are not limited to, cyclopentylene (e.g., cyclopenta-1,3-ylene, cyclopenta-1,2-ylene), cyclohexylene (eg, cyclohexa-1,4-ylene, cyclohexa-1,3-ylene and cyclohexa-1,2-ylene), cycloheptylene, cyclooctylene groups (e.g. 1,5-cyclooctylene),

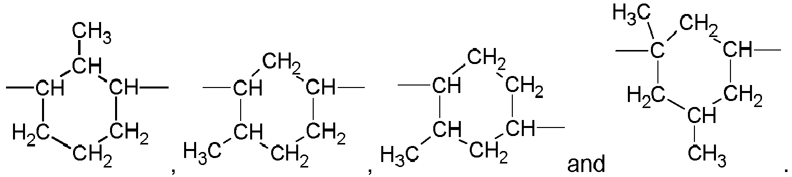

In the context of the present invention, the term "cycloalkylene" also relates to a bridged cyclic hydrocarbon group such as a cyclic hydrocarbon group with 2 to 4 rings having 5 to 30 carbon atoms. Representative examples include, but are not limited to, norbornylene groups (e.g. 1,4-norbornylene group and 2,5-norbornylene group), norbornyl groups (e.g. 2,6-norbornyl), and adamantylene groups (e.g. 1,5-adamantylene group and 2,6-adamantylene group).

### heterocycloalkylene

In the context of the present invention, the term "heterocycloalkylene" also relates to a cyclic or polycyclic, saturated divalent radical having from 5 to 30 ring members in which carbon atoms are replaced with 1, 2 or 3 heteroatom(s) selected from the group consisting of N, O and S. Representative examples include, but are not limited to, 1,5-dioxaoctylene, 4,8-dioxabicy-clo[3.3.0]octylene. Representative examples of heterocycloalkylene include further, but are not limited to, aziridinylene, pyrrolidinylene, piperidinylene, piperazinylene, morpholinylene, thiomorpholinylene, tetrahydrofuranylene, tetrahydrothiofuranylene, tetrahydropyranylene and pyranylene.

### cycloalkenylene

In the context of the present invention, the term "cycloalkenylene" relates to a bivalent cycloalkenyl ring structure, i.e., the cycloalkenyl as defined herein having two single bonds as points of attachment to other groups. Representative examples of "cycloalkenylene" include, but are not limited to, cyclopent-1,2-en-3,5-ylene, 3-cyclohexene-1,2-ylene, 2,5-cyclohexadiene-1,4-ylene, cyclohex-1,2-en-3,5-ylene, 2,5-cyclohexadiene-1,4-ylene and cyclohept-1,2-en-3,5-ylene.

### heterocycloalkenylene

In the context of the present invention, the term "heterocycloalkenylene" relates to a cyclic or polycyclic, nonaromatic unsaturated divalent radical having from 5 to 30 carbon atoms in which carbon atoms are replaced with 1, 2 or 3 heteroatom(s) selected from N, O and S heteroatom and having 1, 2 or 3 double bond(s).

### Substituents (regarding cycloalkylene, cycloalkenylene, heterocycloalkylene, and heterocycloalkenylene)

In the context of the present invention, it is conceivable that if one or more of the substituents denote a cycloalkylene, cycloalkenylene, heterocycloalkylene, and heterocycloalkenylene which is mono- or polysubstituted, this group is preferably substituted with 1, 2, 3, 4 or 5, particularly preferably with 1, 2 or 3, substituents mutually independently selected from the group consisting of phenyl, F, Cl, Br, I, -NO₂, -CN, -OH, -O-phenyl, -O-CH₂-phenyl, -SH, -S-phenyl, -S-CH₂-phenyl, -NH₂, -N(C₁₋₅-alkyl)₂, -NH-phenyl,-N(C₁₋₅-alkyl)(phenyl), -N(C₁₋₅-alkyl)(CH₂-phenyl), - N(C₁₋₅-alkyl)(CH₂-CH₂-phenyl), -C(=O)-H, -C(=O)-C₁₋₅-alkyl, -C(=O)-phenyl, -C(=S)-C₁₋₅-alkyl, -C(=S)-phenyl, -C(=O)-OH, -C(=O)-O-C₁₋₅-alkyl, -C(=O)-O-phenyl, -C(=O)-NH₂, -C(=O)-NH-C₁₋₅-alkyl, -C(=O)-N(C₁₋₅-alkyl)₂, -S(=O)-C₁₋₅-alkyl, -S(=O)-phenyl, -S(=O)₂-C₁₋₅-alkyl, - S(=O)₂-phenyl, -S(=O)₂-NH₂ and -SO₃H, wherein the above-stated-C₁₋₅alkyl residues in each case are linear or branched and the above-stated phenyl residues are unsubstituted or substituted with 1, 2, 3, 4 or 5, preferably with 1, 2, 3 or 4, substituents mutually independently selected from the group consisting of F, Cl, Br, I, -OH, -CN, -NO₂, -SH, -NH₂, -C(=O)-OH, -C₁₋₅ alkyl, -(CH₂)-O-C₁₋₅-alkyl, -C₂₋₅ alkenyl, -C₂₋₅ alkynyl, -C≡C-Si(CH₃)₃, -C≡C-Si(C₂H₅)₃, -S-C₁₋₅-alkyl, -S-phenyl, -S-CH₂-phenyl, -O-C₁₋₅-alkyl, -O-phenyl, -O-CH₂-phenyl, -CF₃, -CHF₂, -CH₂F, -O-CF₃, - O-CHF₂, -O-CH₂F, -C(=O)-CF₃, -S-CF₃, -S-CHF₂ and -S-CH₂F. It is conceivable that alkylene, alkenylene, heteroalkylene and heteroalkenylene groups are independently from one another unsubstituted or substituted with 1, 2 or 3 substituents mutually independently selected from the group consisting of phenyl, F, Cl, Br, I, -OH, -NO₂, -CN, -O-phenyl, -SH, -S-phenyl, -NH₂, - N(CH₃)₂, -N(C₂H₅)₂ and -N(CH₃)(C₂H₅), wherein the phenyl residue is unsubstituted or substituted with 1, 2, 3, 4 or 5 substituents mutually independently selected from the group consisting of F, Cl, Br, I, -OH, -SH, -NO₂, -NH₂, -CN, -O-CH₃, -O-CF₃, and -O-C₂H₅.

### arylene

In the context of the present invention, the term "arylene", refers to a closed aromatic divalent ring or ring system such as phenylene, naphthylene, biphenylene, fluorenylene, and indenyl.

### heteroarylene

In the context of the present invention, the term "heteroarylene", refers to a closed aromatic divalent ring or ring system having at least one heteroatom selected from nitrogen, oxygen and sulfur. Representative examples heteroarylene groups include, but are not limited to, furylene, thienylene, pyridylene, quinolinylene, isoquinolinylene, indolylene, isoindolylene, triazolylene, pyrrolylene, tctrazolylene, imidazolylene, pyrazolylene, oxazolylene, thiazolylene, benzofuranylene, benzothiophenylene, carbazolylene, benzoxazolylene, pyrimidinylene, benzimidazolylene, quinoxalinylene, benzothiazolylene, naphthyridinylene, isoxazolylene, isothiazolylene, purinylene, quinazolinylene, pyrazinylene, 1-oxidopyridylene, pyridazinylene, triazinylene (preferably one or more of vic-triazinylene, asym-triazinylene, and sym-triazinylene), tetrazinylene, oxadiazolylene and thiadiazolylene.

### Substituents of (hetero)arylene

In the context of the present invention, it is conceivable that if one or more of the substituents denote an arylene and a heteroarylene which is mono- or polysubstituted, this is preferably substituted with 1, 2, 3 or 4, particularly preferably with 1, 2 or 3, substituents mutually independently selected from the group consisting of phenyl, F, Cl, Br, I, -NO₂, -CN, -OH, -O-phenyl, -O-CH₂-phenyl, -SH, -S-phenyl, -S-CH₂-phenyl, -NH₂, -N(C₁₋₅-alkyl)₂, -NH-phenyl, -N(C₁₋₅-alkyl)(phenyl), -N(C₁₋₅-alkyl)(CH₂-phenyl), -N(C₁₋₅-alkyl)(CH₂-CH₂-phenyl), -C(=O)-H, -C(=O)-C₁₋₅-alkyl, -C(=O)-phenyl, -C(=S)-C₁₋₅-alkyl, -C(=S)-phenyl, -C(=O)-OH, -C(=O)-O-C₁₋₅-alkyl, -C(=O)-O-phenyl, -C(=O)-NH₂, -C(=O)-NH-C₁₋₅-alkyl, -C(=O)-N(C₁₋₅-alkyl)₂, -S(=O)-C₁₋₅-alkyl, - S(=O)-phenyl, -S(=O)₂-C₁₋₅-alkyl, -S(=O)₂-phenyl, -S(=O)₂-NH₂ and -SO₃H, wherein the above-stated-C₁₋₅ alkyl residues in each case are linear or branched and the above-stated phenyl residues are unsubstituted or substituted with 1, 2, 3, 4 or 5, preferably with 1, 2, 3 or 4, substituents mutually independently selected from the group consisting of F, Cl, Br, I, -OH, -CN, -NO₂, -SH, -NH₂, -C(=O)-OH, -C₁₋₅ alkyl, -(CH₂)-O-C₁₋₅-alkyl, -C₂₋₅ alkenyl, -C₂₋₅ alkynyl, -C≡C-Si(CH₃)₃, - C≡C-Si(C₂H₅)₃, -S-C₁₋₅-alkyl, -S-phenyl, -S-CH₂-phenyl, -O-C₁₋₅-alkyl, -O-phenyl, -O-CH₂-phenyl, -CF₃, -CHF₂, -CH₂F, -O-CF₃, -O-CHF₂, -O-CH₂F, -C(=O)-CF₃, -S-CF₃, -S-CHF₂ and -S-CH₂F. It is conceivable that alkylene, alkenylene, heteroalkylene and heteroalkenylene groups are independently from one another unsubstituted or substituted with 1, 2 or 3 substituents mutually independently selected from the group consisting of phenyl, F, Cl, Br, I, -OH, -NO₂, -CN, - O-phenyl, -SH, -S-phenyl, -NH₂, -N(CH₃)₂, -N(C₂H₅)₂and -N(CH₃)(C₂H₅), wherein the phenyl residue is unsubstituted or substituted with 1, 2, 3, 4 or 5 substituents mutually independently selected from the group consisting of F, Cl, Br, I, -OH, -SH, -NO₂, -CN, -NH₂, -O-CH₃, -O-CF₃, and -O-C₂H₅.

### alkyl

In the context of the present invention, the term "alkyl" refers to acyclic saturated hydrocarbon residues, which may be branched or linear and unsubstituted or at least monosubstituted with, as in the case of C₁-C₃₀ alkyl, 1 to 30 (i.e. 1, 2, 3, 4, 5, 6, 7, 8, 9, 10, 11, 12, 13, 14, 15, 16, 17, 18, 19, 20, 21, 22, 23, 24, 25, 26, 27, 28, 29 or 30) C atoms or with, as in the case of C₁-C₅ alkyl, 1 to 5 (i.e. 1, 2, 3, 4 or 5) C atoms. In the context of the present invention, it is conceivable that if one or more of the substituents denote an alkyl or comprise an alkyl which is mono- or polysubstituted, this is preferably substituted with 1, 2, 3, 4 or 5, particularly preferably with 1, 2 or 3, substituents mutually independently selected from the group consisting of F, Cl, Br, I, -OH, -NO₂, -CN, -SH, -NH₂, -N(C₁₋₅-alkyl)₂, -N(C₁₋₅-alkyl)(phenyl), -N(C₁₋₅-alkyl)(CH₂-phenyl), -N(C₁₋₅-alkyl)(CH₂-CH₂-phenyl), -C(=O)-H, -C(=O)-C₁₋₅-alkyl, -C(=O)-phenyl, -C(=S)-C₁₋₅-alkyl, -C(=S)-phenyl, -C(=O)-OH, -C(=O)-O-C₁₋₅-alkyl, -C(=O)-)-phenyl, -C(=O)-NH₂, -C(=O)-NH-C₁₋₅-alkyl, -C(=O)-N(C₁₋₅-alkyl)₂, -S(=O)-C₁₋₅-alkyl, -S(=O)-phenyl, -S(=O)₂-C₁₋₅-alkyl, -S(=O)₂-phenyl, -S(=O)₂-NH₂ and -SO₃H, wherein the above-stated C₁₋₅-alkyl residues are in each case linear or branched and the above-stated phenyl residues are unsubstituted or substituted with 1, 2, 3, 4 or 5 substituents mutually independently selected from the group consisting of F, Cl, Br, I, -OH, - CN, -CF₃, -NH₂, -O-CF₃, -SH, -O-CH₃, -O-C₂H₅, -O-C₃H₇, methyl, ethyl, n-propyl, isopropyl, n-butyl, 2-butyl, isobutyl and tert-butyl. Particularly preferred substituents may be selected mutually independently from the group consisting of F, Cl, Br, I, -OH, -NO₂, -CN, -SH, -NH₂, -N(CH₃)₂, -N(C₂H₅)₂ and -N(CH₃)(C₂H₅).

In the context of the present invention, an unsubstituted linear C₁-C₃₀ alkyl preferably refers to an alkyl selected from the group consisting of methyl, ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, henicosyl, docosyl, tricosyl and tetracosyl; more preferably selected from the group consisting of hexyl, heptyl, octyl, nonyl, decyl, undecyl, dodecyl, tridecyl, tetradecyl, pentadecyl, hexadecyl, heptadecyl, octadecyl, nonadecyl, eicosyl, henicosyl, docosyl, tricosyl and tetracosyl; more preferably selected from the group consisting of methyl, ethyl, propyl, butyl, pentyl, hexyl, heptyl, octyl, nonyl, decyl, undecyl, dodecyl, tridecyl, tetradecyl and pentadecyl; more preferably selected from the group consisting of methyl, ethyl, propyl, butyl, pentyl, hexyl, heptyl, octyl, nonyl, decyl, undecyl and dodecyl; and more preferably selected from the group consisting of methyl, ethyl, propyl, butyl, pentyl, hexyl, heptyl, octyl, nonyl and decyl.

In the context of the present invention, an unsubstituted branched C₁-C₃₀ alkyl preferably refers to an alkyl selected from the group consisting of isopropyl, iso-butyl, sec-butyl, tert-butyl, sec-isopentyl, 2-pentyl, 2-methyl-4-pentyl, 3-pentyl, neo-pentyl, 2-methyl-pentyl, 2-ethyl-hexyl, 2-propyl-heptyl, 2-butyl-octyl, 2-pentyl-nonyl, 2-hexyl-decyl, iso-hexyl, iso-heptyl, 2,6-dimethyl-4-heptyl, iso-octyl, iso-nonyl, iso-decyl, iso-dodecyl, iso-tetradecyl, iso-hexadecyl, iso-octadecyl, iso-eicosyl, and 3-pinanyl-methyl, more preferably selected from the group consisting of 2-ethyl-hexyl, 2-propyl-heptyl, 2-butyl-octyl, 2-pentyl-nonyl, 2-hexyl-decyl, iso-hexyl, iso-heptyl, iso-octyl, iso-nonyl, iso-decyl, iso-dodecyl, iso-tetradecyl, iso-hexadecyl, iso-octadecyl, iso-eicosyl, 2-methyltricosyl, 2-ethyldocosyl, 3-ethylhenicosyl, 3-ethylicosyl, 4-propylhenicosyl, propylnonadecyl, 6-butyldodecyl and 5-ethylundecyl. In the context of the present invention, a polysubstituted alkyl is understood to be an alkyl which is either poly-, preferably di- or trisubstituted, either on different or on the same C atoms, for example trisubstituted on the same C atom as in the case of - CF₃, or at different locations as in the case of -(CHCl)-(CH₂F). Polysubstitution may proceed with identical or different substituents. Representative examples of substituents include, but are not limited to,-CH₃, -CF₃, -CF₂H, -CFH₂, -(CH₂)-OH, -(CH₂)-NH₂, -(CH₂)-CN, -(CH₂)-(CF₃),-(CH₂)-(CHF₂), -(CH₂)-(CH₂F), -(CH₂)-(CH₂)-O-CH₃, -(CH₂)-(CH₂)-NH₂, -(CH₂)-(CH₂)-CN, -(CF₂)-(CF₃), -(CH₂)-(CH₂)-(CF₃), and -(CH₂)-(CH₂)-(CH₂)-O-CH₃.

In the context of the present invention, a substituted, linear or branched, C₁-C₃₀ alkyl also refers to a branched or linear saturated hydrocarbon group having C₁-C₃₀ carbon atoms substituted with functional groups selected from the group consisting of F, Cl, Br, I, -OH, 2-furanyl, -NO₂, -CN, - SH, -NH₂, -N(C₁₋₅-alkyl)₂, -N(C₁₋₅-alkyl)(phenyl), -N(C₁₋₅-alkyl)(CH₂-phenyl), -N(C₁₋₅-alkyl)(CH₂-CH₂-phenyl), -C(=O)-H, -C(=O)-C₁₋₅-alkyl, -C(=O)-phenyl, -C(=S)-C₁₋₅-alkyl, -C(=S)-phenyl, - C(=O)-OH, -C(=O)-O-C₁₋₅-alkyl, -C(=O)-)-phenyl, -C(=O)-NH₂, -C(=O)-NH-C₁₋₅-alkyl, - C(=O)-N(C₁₋₅-alkyl)₂, -S(=O)-C₁₋₅-alkyl, -S(=O)-phenyl, -S(=O)₂-C₁₋₅-alkyl, -S(=O)₂-phenyl, - S(=O)₂-NH₂ and -SO₃H, wherein the above-stated C₁₋₅-alkyl residues are in each case linear or branched and the above-stated phenyl residues are preferably unsubstituted or substituted with 1, 2, 3, 4 or 5 substituents mutually independently selected from the group consisting of F, Cl, Br, I, -OH, -CN, -CF₃, -NH₂, -O-CF₃, -SH, -O-CH₃, -O-C₂H₅, -O-C₃H₇, methyl, ethyl, n-propyl, isopropyl, n-butyl, 2-butyl, isobutyl and tert-butyl. Particularly preferred substituents may be selected mutually independently from the group consisting of F, Cl, Br, I, -OH, -NO₂, -CN, -SH, - NH₂, -N(CH₃)₂, -N(C₂H₅)₂ and -N(CH₃)(C₂H₅).

In the context of the present invention, a substituted, linear or branched, C₁-C₃₀ alkyl also refers to a branched or linear saturated hydrocarbon group having C₁-C₃₀ carbon atoms substituted with functional groups selected from the group consisting of hydroxy, alkoxy, C(=O)R, CN and SR, preferably selected from the group consisting of 1-methoxy methyl, 1-methoxy methyl, 1-methoxy ethyl, 1-methoxy propyl, 1-methoxy butyl, 2-hydroxy-butyl, 1-methoxy pentyl, 1-methoxy hexyl, 1-methoxy heptyl, 1-methoxy octyl, 1-methoxy nonyl, decyl, 1-methoxy undecyl, 1-methoxy dodecyl, 1-methoxy tridecyl, 1-methoxy tetradecyl, 1-methoxy pentadecyl, 1-methoxy hexadecyl, 1-methoxy heptadecyl, 1-methoxy octadecyl, 1-methoxy nonadecyl, 1-methoxy eicosyl, 1-methoxy henicosyl, 1-methoxy docosyl, 1-methoxy tricosyl, 1-methoxy tetracosyl, 2-methoxy propyl, 2-methoxy butyl, 2-methoxy pentyl, 2-methoxy hexyl, 2-methoxy heptyl, 2-methoxy octyl, 2-methoxy nonyl, decyl, 2-methoxy undecyl, 2-methoxy dodecyl, 2-methoxy tridecyl, 2-methoxy tetradecyl, 2-methoxy pentadecyl, 2-methoxy hexadecyl, 2-methoxy heptadecyl, 2-methoxy octadecyl, 2-methoxy nonadecyl, 2-methoxy eicosyl, 2-methoxy henicosyl, 2-methoxy docosyl, 2-methoxy tricosyl, 2-methoxy tetracosyl, 1-acetoxy methyl, 1-acetoxy ethyl, 1-acetoxy propyl, 1-acetoxy butyl, 1-acetoxy pentyl, 1-acetoxy hexyl, 1-acetoxy heptyl, 1-acetoxy octyl, 1-acetoxy nonyl, decyl, 1-acetoxy undecyl, 1-acetoxy dodecyl, 1-acetoxy tridecyl, 1-acetoxy tetradecyl, 1-acetoxy pentadecyl, 1-acetoxy hexadecyl, 1-acetoxy heptadecyl, 1-acetoxy octadecyl, 1-acetoxy nonadecyl, 1-acetoxy eicosyl, 1-acetoxy henicosyl, 1-acetoxy docosyl, 1-acetoxy tricosyl, 1-acetoxy tetracosyl, 1-cyano methyl, 1-cyano ethyl, 1-cyano propyl, 1-cyano butyl, 1-cyano pentyl, 1-cyano hexyl, 1-cyano heptyl, 1-cyano octyl, 1-cyano nonyl, decyl, 1-cyano undecyl, 1-cyano dodecyl, 1-cyano tridecyl, 1-cyano tetradecyl, 1-cyano pentadecyl, 1-cyano hexadecyl, 1-cyano heptadecyl, 1-cyano octadecyl, 1-cyano nonadecyl, 1-cyano eicosyl, 1-cyano henicosyl, 1-cyano docosyl, 1-cyano tricosyl, 1-cyano tetracosyl, 2-cyano propyl, 2-cyano butyl, 2-cyano pentyl, 2-cyano hexyl, 2-cyano heptyl, 2-cyano octyl, 2-cyano nonyl, decyl, 2-cyano undecyl, 2-cyano dodecyl, 2-cyano tridecyl, 2-cyano tetradecyl, 2-cyano pentadecyl, 2-cyano hexadecyl, 2-cyano heptadecyl, 2-cyano octadecyl, 2-cyano nonadecyl, 2-cyano eicosyl, 2-cyano henicosyl, 2-cyano docosyl, 2-cyano tricosyl, 2-cyano tetracosyl, 1-thioyl methyl, 1-thioyl ethyl, 1-thioyl propyl, 1-thioyl butyl, 1-thioyl pentyl, 1-thioyl hexyl, 1-thioyl heptyl, 1-thioyl octyl, 1-thioyl nonyl, decyl, 1-thioyl undecyl, 1-thioyl dodecyl, 1-thioyl tridecyl, 1-thioyl tetradecyl, 1-thioyl pentadecyl, 1-thioyl hexadecyl, 1-thioyl heptadecyl, 1-thioyl octadecyl, 1-thioyl nonadecyl, 1-thioyl eicosyl, 1-thioyl henicosyl, 1-thioyl docosyl, 1-thioyl tricosyl and 1-thioyl tetracosyl.

### Alkenyl

In the context of the present invention, the term "alkenyl" refers to unsubstituted, linear C₂-C₃₀ alkenyl. Representative examples of the alkenyl include, but are not limited to, 1-propenyl, 1-butenyl, 1-pentenyl, 1-hexenyl,2-hexenyl, 1-heptenyl, 2-heptenyl, 1-octenyl, 2-octenyl, 1-nonenyl, 2-nonenyl, 1-decenyl, 2-decenyl, 1-undecenyl, 2-undecenyl, 1-dodecenyl, 2-dodecenyl, 1-tridecenyl, 2-tridecenyl, 1-tetradecenyl, 2-tetradecenyl, 1-pentadecenyl, 2-pentadecenyl, 1-hexadecenyl,2-hexadecenyl, 1-heptadecenyl, 2-heptadecenyl, 1-octadecenyl, 2-octadecenyl, 1-nonadecenyl, 2-nonadecenyl, 1-eicosenyl and 2-eicosenyl, more preferably selected from 1-hexenyl,2-hexenyl, 1-heptenyl, 2-heptenyl, 1-octenyl, 2-octenyl, 1-nonenyl, 2-nonenyl, 1-decenyl, 2-decenyl, 1-undecenyl, 2-undecenyl, 1-dodecenyl, 2-dodecenyl, 1-tridecenyl, 2-tridecenyl, 1-tetradecenyl, 2-tetradecenyl, 1-pentadecenyl, 2-pentadecenyl, 1-hexadecenyl, 2-hexadecenyl, 1-heptadecenyl, 2-heptadecenyl, 1-octadecenyl, 2-octadecenyl, 1-nonadecenyl, 2-nonadecenyl, 1-eicosenyl and 2-eicosenyl, 20-henicosenyl, 2-docosenyl, 6-tricosenyl and 2-tetracosenyl.

Representative examples of the unsubstituted branched C₂-C₃₀ alkenyl include, but are not limited to, isopropenyl, iso-butenyl, neo-pentenyl, 2-ethyl-hexenyl, 2-propyl-heptenyl, 2-butyl-octenyl, 2-pentyl-nonenyl, 2-hexyl-decenyl, iso-hexenyl, iso-heptenyl, iso-octenyl, iso-nonenyl, iso-decenyl, iso-dodecenyl, iso-tetradecenyl, iso-hexadecenyl, iso-octadecenyl, iso-eicosenyl, 2-methyl tricosenyl, 2-ethyl docosenyl, 3-ethylhenicosenyl, 3-ethyl icosenyl, 4-propylhenicosenyl, 4-propylnonadecenyl, 6-butyldodecenyl, 5-ethylundedcenyl, 1,4-hexadienyl, 1,3-hexadienyl, 2,5-hexadienyl, 3,5-hexadienyl, 2,4-hexadienyl, 1,3,5-hexatrienyl, 1,3,6-heptatrienyl, 1,4,7-octatrienyl or 2-methyl-1 ,3,5hexatrienyl, 1,3,5,7-octatetraenyl, 1 ,3,5,8-nonatetraenyl, 1,4,7,10-undecatetraenyl, 2-ethyl-1,3,6,8-nonatetraenyl, 2-ethenyl-1,3,5,8-nonatetraenyl, 1,3,5,7,9-decapentaenyl, 1,4,6,8,10-undecapentaenyl, and 1,4,6,9,11-dodecapentaenyl.

In the context of the present invention, a substituted, linear or branched, C₂-C₃₀ alkenyl refers to a branched or a linear unsaturated hydrocarbon group having C₂-C₃₀ carbon atoms substituted with functional groups selected from alkoxy, C(=O)R, CN and SR; wherein R is hydrogen, substituted or unsubstituted, linear or branched C₁-C₃₀ alkyl, substituted or unsubstituted, linear or branched C₂-C₃₀ alkenyl, substituted or unsubstituted C₅-C₃₀ cycloalkyl, substituted or unsubstituted C₅-C₃₀ cycloalkenyl, substituted or unsubstituted C₆-C₃₀ aryl, substituted or unsubstituted C₇-C₃₀ arylalkyl.

In the context of the present invention, the term "alkenyl" further refers to a branched or an linear unsaturated hydrocarbon group having C₂-C₃₀ carbon atoms substituted with functional groups selected from, alkoxy, C(=O)R, CN and SR; preferably selected from the group consisting of 1-methoxy ethenyl, 2-methoxy propenyl, 4-methoxy butenyl, 3-methoxy pentenyl, 5-methoxy hexenyl, 2-methoxy heptenyl, 5-methoxy octenyl, 3-methoxy nonenyl, 6-methoxy undecenyl, 1-methoxy dodec-2-enyl, 1-methoxy tridec-5-enyl, 3-methoxy tetradic-5-enyl, 3-methoxy pentade-12-encyl, 10-methoxy hexadec-15-enyl, 12-methoxy heptadic-16-enyl,1-methoxy octadec-3-enyl, 1-methoxy nonadec-2-enyl, 1-methoxy eicos-20-enyl, 1-methoxy henicos-2-enyl, 1-methoxy docos-4-enyl, 1-methoxy tricos-22-enyl, 1-methoxy tetracos-23-enyl, 2-methoxy prop-1-enyl, 2-methoxy but-1-enyl, 2-methoxy pent-4-enyl, 2-methoxy hex-2-enyl, 2-methoxy hept-3-enyl, 2-methoxy oct-7-enyl, 2-methoxy non-5-enyl, 2-methoxy undec-10-enyl, 2-methoxy dodec-4-enyl, 2-methoxy tridec-12-enyl, 2-methoxy tetradic-10-enyl, 2-methoxy pentadec-14-enyl, 2-methoxy hexadec-1-enyl, 2-methoxy heptadic-1-enyl, 2-methoxy octadic-12-enyl, 2-methoxy nonadec-10-enyl, 2-methoxy eicos-18-enyl, 2-methoxy henicos-2-enyl, 2-methoxy docos-3-enyl, 20-methoxy tricos-2-enyl, 21-methoxy tetracos-4-enyl, 1-acetoxy ethenyl, 1-acetoxy prop-1-enyl, 1-acetoxy but-2-enyl, 1-acetoxy pent-4-enyl, 1-acetoxy hex-2-enyl, 1-acetoxy hept-1-enyl, 1-acetoxy oct-7-enyl, 1-acetoxy non-2-enyl, 5-acetoxy dec-3-enyl, 1-acetoxy undec-10-enyl, 1-acetoxy dodec-2-enyl, 1-acetoxy tridec-12-enyl, 10-acetoxy tetradec-2-enyl, 15-acetoxy pentadec-2-enyl, 10-acetoxy hexadec-2-enyl, 11-acetoxy heptadec-1-enyl, 13-acetoxy octadec-2-enyl, 1-acetoxy nonadec-14-enyl, 20-acetoxy eicos-19-enyl, 1-acetoxy henicos-2-enyl, 1-acetoxy docos-10-enyl, 1-acetoxy tricos-22-enyl, 1-acetoxy tetracos-23-enyl, 1-cyano eth-1-enyl, 1-cyano prop-2-enyl, 1-cyano but-2-enyl, 1-cyano pent-3-enyl, 1-cyano hex-5-enyl, 1-cyano hept-6-enyl, 1-cyano oct-2-enyl, 1-cyano non-3-enyl, 11-cyano undec-2-enyl, 10-cyano dodec-2-enyl, 10-cyano tridec-12-enyl, 1-cyano tetradec-3-enyl, 1-cyano pentadec-14-enyl, 1-cyano hexadec-15-enyl, 1-cyano heptadec-2-enyl, 1-cyano octadec-3-enyl, 1-cyano nonadec-18-enyl, 1-cyano eicos-10-enyl, 1-cyano henicos-20-enyl, 15-cyano docos-3-enyl, 1-cyano tricos-20-enyl, 1-cyano tetracos-2-enyl, 2-cyano prop-2-enyl, 2-cyano but-1-enyl, 2-cyano pent-1-enyl, 2-cyano hex-3-enyl, 2-cyano hept-6-enyl, 2-cyano oct-1-enyl, 2-cyano non-8-enyl, 2-cyano undec-10-enyl, 2-cyano dodec-1-enyl, 2-cyano tridec-12-enyl, 2-cyano tetradec-10-enyl, 2-cyano pentadec-3-enyl, 2-cyano hexadec-2-enyl, 2-cyano heptadec-1-enyl, 2-cyano octadec-12-enyl, 2-cyano nonadec-15-enyl, 2-cyano ei-cos-1-enyl, 2-cyano henicos-5-enyl, 2-cyano docos-20-enyl, 2-cyano tricos-22-enyl, 2-cyano tetracos-20-enyl, 1-thionyl eth-1-enyl, 1-thionyl prop-2-enyl, 1-thionyl but-2-enyl, 1-thionyl pent-4-enyl, 1-thionyl hex-2-enyl, 1-thionyl hept-5-enyl, 1-thionyl oct-3-enyl, 1-thionyl non-5-enyl, 1-thionyl undec-10-enyl, 1-thionyl dodec-11-enyl, 1-thionyl tridec-2-enyl, 1-thionyl tetradec-4-enyl, 1-thionyl pentadec-5-enyl, 1-thionyl hexadec-3-enyl, 1-thionyl heptadec-2-enyl, 1-thionyl octadec-3-enyl, 1-thionyl nonadec-15-enyl, 1-thionyl eicos-18-enyl, 1-thionyl henicos-20-enyl, 1-thionyl docos-21-enyl, 1-thionyl tricos-20-enyl and 1-thionyl tetracos-22-enyl.

In the context of the present invention, the term "heteroalkyl" refers to an alkyl group, in which one or more carbon atoms have in each case been replaced by a heteroatom mutually independently selected from the group consisting of oxygen, sulfur and nitrogen (NH). A heteroalkyl preferably comprises 1, 2 or 3 heteroatom(s) mutually independently selected from the group consisting of oxygen, sulfur and nitrogen (NH) as chain link(s). Further, a heteroalkyl may be 2-to 12-membered, preferably 2- to 6-membered.

### heteroalkenyl

In the context of the present invention, the term "heteroalkenyl" refers to an alkenyl group, in which one or more carbon atoms have in each case been replaced by a heteroatom mutually independently selected from the group consisting of oxygen, sulfur and nitrogen (NH). A heteroalkenyl preferably comprises 1, 2 or 3 heteroatom(s) mutually independently selected from the group consisting of oxygen, sulfur and nitrogen (NH) as chain link(s). Further, a heteroalkenyl may be 3- to 12-membered, preferably 3- to 6-membered.

### cycloalkyl

In the context of the present invention, the term "cycloalkyl" refers to a monocyclic and bicyclic saturated cycloaliphatic radical having 5 to 30 carbon atoms. Representative examples of unsubstituted or branched C₅-C₃₀ monocyclic and bicyclic cycloalkyl include, but are not limited to, cyclopentyl, cyclohexyl, dicyclohexylmethyl, cyclohexylmethyl, cyclododecyl, cycloheptyl, cyclooctyl, bicyclo[2.2.1]heptyl, and bicyclo[3.1.1]heptyl.

In the context of the present invention, a C₅-C₃₀ monocyclic and bicyclic cycloalkyl can be further branched with one or more equal or different alkyl groups such as methyl, ethyl, n-propyl, iso-propyl, n-butyl, iso-butyl, n-pentyl, iso-pentyl, neo-pentyl etc. The representative examples of branched C₃-C₁₀ monocyclic and bicyclic cycloalkyl include, but are not limited to, methyl cyclohexyl and dimethyl cyclohexyl.

### cycloalkenyl

In the context of the present invention, the term "cycloalkenyl" refers to a monocyclic and bicyclic unsaturated cycloaliphatic radical having 5 to 30 carbon atoms, which comprises one or more double bonds. Representative examples of C₅-C₃₀ cycloalkenyl include, but are not limited to, cyclopentenyl, cyclohexenyl, cycloheptenyl, cyclooctenyl, cyclononenyl or cyclodecenyl. These radicals can be branched with one or more equal or different alkyl radical, preferably with methyl, ethyl, n-propyl or iso-propyl. The representative examples of branched C₅-C₃₀ monocyclic and bicyclic cycloalkenyl include, but are not limited to, methyl cyclohexenyl and dimethyl cyclohexenyl.

### heterocycloalkyl

In the context of the present invention, the term "heterocycloalkyl" means a non-aromatic monocyclic or polycyclic ring comprising 5 to 30 ring members in which at least one carbon atom as a ring member is replaced with at least one heteroatom selected from O, S, and N. Representative examples of heterocycloalkyl include, but are not limited to, aziridinyl, pyrrolidinyl, pyrrolidino, piperidinyl, piperidino, piperazinyl, piperazino, morpholinyl, morpholino, thiomorpholinyl, thiomorpholino, tetrahydrofuranyl, tetrahydrothiofuranyl, tetrahydropyranyl and pyranyl.

### heterocycloalkenyl

In the context of the present invention, the term "heterocycloalkenyl" refers to a non-aromatic unsaturated monocyclic or polycyclic ring comprising 5 to 30 ring members in which at least carbon atom as ring member is replaced with at least one heteroatom selected from O, S, and N and having at least one double bond. Representative examples include, but are not limited to, (2,3)-dihydrofuranyl, (2,3)-dihydrothienyl, (2,3)-dihydropyrrolyl, (2,5)-dihydropyrrolyl, (2,5)-dihydropyrrolyl, (2,3)-dihydroisoxazolyl, (1,4)-dihydropyridin-1-yl, di-hydropyranyl, 2,3-dihydropyrazol-1-yl, 2,3-dihydropyrazol-2-yl, 2,3-dihydropyrazol-3-yl, 2,3- dihydropyrazol-4-yl, 2,3-dihydropyrazol-5-yl, 3,4-dihydropyrazol-1-yl, 3,4-dihydropyrazol-3-yl, 3,4-dihydropyrazol-4-yl, 3,4-dihydropyrazol-5-yl, 4,5-dihydropyrazol-1-yl, 4,5-dihydropyrazol-3-yl, 4,5-dihydropyrazol-4-yl, 4,5-dihydropyrazol-5-yl, 2,3-dihydrooxazol-2-yl, 2,3-dihydrooxazol-3-yl, 2,3-dihydrooxazol-4-yl, 2,3-dihydrooxazol-5-yl, 3,4-dihydrooxazol-2-yl, 3,4-dihydrooxazol-3-yl, 3,4-dihydrooxazol-4-yl, 4,5-dihydropyrazol-2-yl, 4,5-dihydropyrazol-3-yl, 4,5-dihydropyrazol-4-yl, 4,5-dihydropyrazol-5-yl, 2,5-dihydrothienyl and (1,2,3,4)-tetrahydropyridin-1-yl.

### Substituents regarding heteroalkyl, heteroalkenyl, cycloalkyl, cycloalkenyl, heterocycloalkyl and heterocycloalkenyl

In the context of the present invention it is conceivable that if one or more of the substituents denote a heteroalkyl, heteroalkenyl, cycloalkyl, cycloalkenyl, heterocycloalkyl and heterocycloalkenyl which is mono- or polysubstituted, this group is preferably substituted with 1, 2, 3, 4 or 5, particularly preferably with 1, 2 or 3, substituents mutually independently selected from the group consisting of F, Cl, Br, I, -CN, -NO₂, -OH, -SH, -NH₂, oxo (=O), thioxo (=S), -C(=O)-OH, C₁₋₅ alkyl, -C₂₋₅ alkenyl, -C₂₋₅ alkynyl, -C≡C-Si(CH₃)₃, -C≡C-Si(C₂H₅)₃, -(CH₂)-O-C₁₋₅-alkyl, -S-C₁₋₅-alkyl, -S-phenyl, -S-CH₂-phenyl, -O-C₁₋₅-alkyl, -O-phenyl, -O-CH₂-phenyl, -CF₃, -CHF₂,-CH₂F, -O-CF₃, -O-CHF₂, -O-CH₂F, -C(=O)-CF₃, -S-CF₃, -S-CHF₂, -S-CH₂F, -S(=O)₂-phenyl, -S(=O)₂-C₁₋₅-alkyl, -S(=O)-C₁₋₅-alkyl, -NH-C₁₋₅-alkyl, N(C₁₋₅alkyl)(C₁₋₅-alkyl),-C(=O)-O-C₁₋₅-alkyl, -C(=O)-H, -C(=O)-C₁₋₅-alkyl, -CH₂-O-C(=O)-phenyl, -O-C(=O)-phenyl, -NH-S(=O)₂-C₁₋₅-alkyl, -NH-C(=O)-C₁₋₅-alkyl, -C(=O)-NH₂, -C(=O)-NH-C₁₋₅-alkyl, -C(=O)-N(C₁₋₅-alkyl)₂, pyrazolyl, phenyl, furyl (furanyl), thiadiazolyl, thiophenyl (thienyl) and benzyl, wherein the above-stated C₁₋₅ alkyl residues are in each case linear or branched and the cyclic substituents or the cyclic residues of these substituents themselves are in each case unsubstituted or substituted with 1, 2, 3, 4 or 5, preferably with 1, 2, 3 or 4, substituents mutually independently selected from the group consisting of F, Cl, Br, I, -CN, -CF₃, -OH, -NH₂, -O-CF₃, -SH, -O-C₁₋₅-alkyl, -O-phenyl, -O-CH₂-phenyl, -(CH₂)-O-C₁₋₅-alkyl, -S-C₁₋₅-alkyl, -S-phenyl, -S-CH₂-phenyl, -C₁₋₅ alkyl, -C₂₋₅ alkenyl, -C₂₋₅ alkynyl, -C≡C-Si(CH₃)₃, -C≡C-Si(C₂H₅)₃, -C(=O)-O-C₁₋₅-alkyl and - C(=O)-CF₃.

### aryl

In the context of the present invention, the term "aryl" refers to aromatic compounds that may have more than one aromatic ring. The representative examples for substituted and unsubstituted C₆-C₃₀ aryl include, but are not limited to, phenyl, benzyl, cyclohexyl(phenyl)methyl, naphthyl, anthracenyl, tetraphenyl, phenalenyl and phenanthrenyl.

### heteroaryl

In the context of the present invention, the term "heteroaryl" refers to a monocyclic or polycyclic, preferably a mono-, bi- or tricyclic aromatic hydrocarbon residue with preferably 5, 6, 7, 8, 9, 10, 11, 12, 13, 14, 15, 16, 17, 18, 19, 20, 21, 22, 23, 24, 25, 26, 27, 28, 29 or 30 ring members, particularly preferably with 5, 6, 9, 10, 13 or 14 ring atoms, very particularly preferably with 5 or 6 ring members, in which one or more carbon atoms as ring members have been replaced with heteroatoms each independently selected from the group consisting of oxygen, sulfur and nitrogen (NH). A heteroaryl may comprise 1, 2, 3, 4 or 5, preferably 1, 2 or 3, heteroatom(s) mutually independently selected from the group consisting of oxygen, sulfur and nitrogen (NH) as ring member(s) A heteroaryl can be unsubstituted or monosubstituted or identically or differently polysubstituted. Representative examples of heteroaryl include, but are not limited to, thienyl, furyl, pyrrolyl, pyrazolyl, pyrazinyl, pyranyl, triazolyl, pyridinyl, imidazolyl, indolyl, isoindolyl, benzo[b]furanyl, benzo[b]thiophenyl, benzo[d]thiazolyl, benzodiazolyl, benzotriazolyl, benzoxazolyl, benzisoxazolyl, thiazolyl, thiadiazolyl, oxazolyl, oxadiazolyl, isoxazolyl, pyridazinyl, pyrimidinyl, indazolyl, quinoxalinyl, quinazolinyl, quinolinyl, naphthridinyl and isoquinolinyl.

In the context of the present invention, aryl or heteroaryl may be fused (anellated) with a mono- or bicyclic ring system. Representative examples of aryl which are fused with a mono- or bicyclic ring system include, but are not limited to, (1,2,3,4)-tetrahydroquinolinyl, (1,2,3,4)-tetrahydroisoquinolinyl, (2,3)-dihydro-1H-isoindolyl, (1,2,3,4)-tetrahydronaphthyl, (2,3)-dihydrobenzo[1.4]dioxinyl, benzo[1.3]dioxolyl and (3,4)-dihydro-2H-benzo[1.4]oxazinyl.

### arylalkyl

In the context of the present invention, the term "arylalkyl" refers to an aryl ring attached to an alkyl chain. The representative examples for the arylalkyl include, but are not limited to, 1-phenylmethyl, 1-phenylethyl, 1-phenylpropyl, 1-phenylbutyl, 1-methyl-1-phenyl-propyl, 3-phenylpropyl, 4-phenylbutyl, 3-phenylbutyl and 2-methyl-3-phenyl-propyl.

### Substituents regarding aryl, heteroaryl or arylalkyl etc.

In the context of the present invention it is conceivable that if one or more of the substituents denote an aryl, heteroaryl or arylalkyl or comprise an aryl or heteroaryl which is mono- or polysubstituted, this may preferably be substituted with 1, 2, 3, 4 or 5, particularly preferably with 1, 2 or 3, substituents mutually independently selected from the group consisting of F, Cl, Br, I, -OH, -CN, -NO₂, -SH, -NH₂, -C(=O)-OH, -C₁₋₅ alkyl, -(CH₂)-O-C₁₋₅-alkyl, -C₂₋₅alkenyl, -C₂₋₅alkynyl, -C≡C-Si(CH₃)₃, -C≡C-Si(C₂H₅)₃, -S-C₁₋₅-alkyl, -S-phenyl, -S-CH₂-phenyl, -O-C₁₋₅-alkyl, -O-phenyl, -O-CH₂-phenyl, -CF₃, -CHF₂, -CH₂F, -O-CF₃, -O-CHF₂, -O-CH₂F, -C(=O)-CF₃, -S-CF₃, -S-CHF₂, -S-CH₂F, -S(=O)₂-phenyl, -S(=O)₂-C₁₋₅-alkyl, -S(=O)-C₁₋₅-alkyl, -NH-C₁₋₅-alkyl, N(C₁₋₅alkyl)₂, -C(=O)-O-C₁₋₅-alkyl, -C(=O)-H; -C(=O)-C₁₋₅-alkyl, -CH₂-O-C(=O)-phenyl, -O-C(=O)-phenyl, -NH-S(=O)₂-C₁₋₅-alkyl, -NH-C(=O)-C₁₋₅-alkyl, -C(=O)-NH₂, -C(=O)-NH-C₁₋₅-alkyl, -C(=O)-N(C₁₋₅-alkyl)₂, pyrazolyl, phenyl, furyl (furanyl), thiazolyl, thiadiazolyl, thiophenyl (thienyl), benzyl and phenethyl, wherein the above-stated C₁₋₅ alkyl residues are in each case linear or branched and the cyclic substituents or the cyclic residues of these substituents themselves are unsubstituted or substituted with 1, 2, 3, 4 or 5, preferably with 1, 2, 3 or 4, substituents mutually independently selected from the group consisting of F, Cl, Br, I, -OH, -CN, -NO₂, -SH, -NH₂, -C(=O)-OH, -C₁₋₅ alkyl, -(CH₂)-O-C₁₋₅-alkyl, -C₂₋₅ alkenyl, -C₂₋₅ alkynyl, -C≡C-Si(CH₃)₃, - C≡C-Si(C₂H₅)₃, -S-C₁₋₅-alkyl, -S-phenyl, -S-CH₂-phenyl, -O-C₁₋₅-alkyl, -O-phenyl, -O-CH₂-phenyl, -CF₃, -CHF₂, -CH₂F, -O-CF₃, -O-CHF₂, -O-CH₂F, -C(=O)-CF₃, -S-CF₃, -S-CHF₂ and -S-CH₂F; most preferably, the substituents are in each case mutually independently selected from the group consisting of F, Cl, Br, I, -OH, -CN, -NO₂, methyl, ethyl, n-propyl, isopropyl, n-butyl, isobutyl, 2-butyl, tert.-butyl, n-pentyl, neopentyl, ethenyl, allyl, ethynyl, propynyl, -C=C-Si(CH₃)₃, -C≡C-Si(C₂H₅)₃, -CH₂-O-CH₃, -CH₂-O-C₂H₅, -SH, -NH₂, -C(=O)-OH, -S-CH₃, -S-C₂H₅, -S(=O)-CH₃, -S(=O)₂-CH₃, -S(=O)-C₂H₅, -S(=O)₂-C₂H₅, -O-CH₃, -O-C₂H₅, -O-C₃H₇, - O-C(CH₃)₃, -CF₃, -CHF₂, -CH₂F, -O-CF₃, -O-CHF₂, -O-CH₂F, -C(=O)-CF₃, -S-CF₃, -S-CHF₂, -S-CH₂F, -S(=O)₂-phenyl, pyrazolyl, phenyl, -N(CH₃)₂, -N(C₂H₅)₂, -NH-CH₃, -NH-C₂H₅, -CH₂-O-C(=O)-phenyl, -NH-S(=O)₂-CH₃, -C(=O)-O-CH₃, -C(=O)-O-C₂H₅, -C(=O)-O-C(CH₃)₃, - C(=O)-H, -C(=O)-CH₃, -C(=O)-C₂H₅, -NH-C(=O)-CH₃, -NH-C(=O)-C₂H₅, -O-C(=O)-phenyl, - C(=O)-NH₂, -C(=O)-NH-CH₃, -C(=O)-N(CH₃)₂, phenyl, furyl (furanyl), thiadiazolyl, thiophenyl (thienyl) and benzyl, wherein the cyclic substituents or the cyclic residues of these substituents themselves are in each case unsubstituted or substituted with 1, 2, 3, 4, or 5, preferably with 1, 2, 3 or 4, substituents mutually independently selected from the group consisting of F, Cl, Br, I, - OH, -CN, -NO₂, -SH, -NH₂, -C(=O)-OH, methyl, ethyl, n-propyl, isopropyl, n-butyl, isobutyl, 2-butyl, tert.-butyl, n-pentyl, neopentyl, ethenyl, allyl, ethynyl, propynyl, -C≡C-Si(CH₃)₃, -C=C-Si(C₂H₅)₃, -CH₂-O-CH₃, -CH₂-O-C₂H₅, -S-CH₃, -S-C₂H₅, -S(=O)-CH₃, -S(=O)₂-CH₃, -S(=O)-C₂H₅, -S(=O)₂-C₂H₅, -O-CH₃, -O-C₂H₅, -O-C₃H₇, -O-C(CH₃)₃, -CF₃, -CHF₂, -CH₂F, -O-CF₃, - O-CHF₂, -O-CH₂F, -C(=O)-CF₃, -S-CF₃, -S-CHF₂ and -S-CH₂F.

In the context of the present invention, a substituted aryl may be selected from the group consisting of 2-methylphenyl, 3-methylphenyl, 4-methylphenyl, 2-fluorophenyl, 3-fluorophenyl, 4-fluorophenyl, 2-cyanophenyl, 3-cyanophenyl, 4-cyanophenyl, 2-aminophenyl, 3-aminophenyl, 4-aminophenyl, 2-dimethylaminophenyl, 3-dimethylaminophenyl, 4-dimethylaminophenyl, 2-methylaminophenyl, 3-methylaminophenyl, 4-methylaminophenyl, 2-acetylphenyl, 3-acetylphenyl, 4-acetylphenyl, 2-methylsulfinylphenyl, 3-methylsulfinylphenyl, 4-methylsulfinylphenyl, 2-methylsulfonylphenyl, 3-methylsulfonylphenyl, 4-methylsulfonylphenyl, 2-methoxyphenyl, 3-methoxyphenyl, 4-methoxyphenyl, 2-chlorophenyl, 3-chlorophenyl, 4-chlorophenyl, 2-ethoxyphenyl, 3-ethoxyphenyl, 4-ethoxyphenyl, 2-trifluoromethylphenyl, 3-trifluoromethylphenyl, 4-trifluoromethylphenyl, 2-difluoromethylphenyl, 3-difluoromethylphenyl, 4-difluoromethylphenyl, 2-fluoromethylphenyl, 3-fluoromethylphenyl, 4-fluoromethylphenyl, 2-nitrophenyl, 3-nitrophenyl, 4-nitrophenyl, 2-ethylphenyl, 3-ethylphenyl, 4-ethylphenyl, 2-propylphenyl, 3-propylphenyl, 4-propylphenyl, 2-isopropylphenyl, 3-isopropylphenyl, 4-isopropylphenyl, 2-tert.-butylphenyl, 3-tert.-butylphenyl, 4-tert.-butylphenyl, 2-carboxyphenyl, 3-carboxyphenyl, 4-carboxyphenyl, 2-ethenylphenyl, 3-ethenylphenyl, 4-ethenylphenyl, 2-ethynylphenyl, 3-ethynylphenyl, 4-ethynylphenyl, 2-allylphenyl, 3-allylphenyl, 4-allylphenyl, 2-trimethylsilanylethynylphenyl, 3-trimethylsilanylethynylphenyl, 4-trimethylsilanylethynylphenyl, 2-formylphenyl, 3-formylphenyl, 4-formylphenyl, 2-acetaminophenyl, 3-acetaminophenyl, 4-acetaminophenyl, 2-dimethylaminocarbonylphenyl, 3-dimethylaminocarbonylphenyl, 4-dimethylaminocarbonylphenyl, 2-methoxymethylphenyl, 3-methoxymethylphenyl, 4-methoxymethylphenyl, 2-ethoxymethylphenyl, 3-ethoxymethylphenyl, 4-ethoxymethylphenyl, 2-aminocarbonylphenyl, 3-aminocarbonylphenyl, 4-aminocarbonylphenyl, 2-methylaminocarbonylphenyl, 3-methylaminocarbonylphenyl, 4-methylaminocarbonylphenyl, 2-carboxymethyl ester phenyl, 3-carboxymethyl ester phenyl, 4-carboxymethyl ester phenyl, 2-carboxyethyl ester phenyl, 3-carboxyethyl ester phenyl, 4-carboxyethyl ester phenyl, 2-carboxy-tert.-butyl ester phenyl, 3-carboxy-tert.-butyl ester phenyl, 4-carboxy-tert.-butyl ester phenyl, 2-methylmercaptophenyl, 3-methylmercaptophenyl, 4-methylmercaptophenyl, 2-ethylmercaptophenyl, 3-ethylmercaptophenyl, 4-ethylmercaptophenyl, 2-biphenyl, 3-biphenyl, 4-biphenyl, 2-bromophenyl, 3-bromophenyl, 4-bromophenyl, 2-iodophenyl, 3-iodophenyl, 4-iodophenyl, 2-trifluoromethoxyphenyl, 3-trifluoromethoxyphenyl, 4-trifluoro-methoxyphenyl, 2-fluoro-3-trifluoromethylphenyl, 2-fluoro-4-methylphenyl, (2,3)-difluorophenyl, (2,3)-dimethylphenyl, (2,3)-dichlorophenyl, 3-fluoro-2-trifluoro-methylphenyl, (2,4)-dichlorophenyl, (2,4)-difluorophenyl, 4-fluoro-2-trifluoromethylphenyl, (2,4)-dimethoxyphenyl, 2-chloro-4-fluorophenyl, 2-chloro-4-nitrophenyl, 2-chloro-4-methylphenyl, 2-chloro-5-trifluoromethylphenyl, 2-chloro-5-methoxyphenyl, 2-bromo-5-trifluoromethylphenyl, 2-bromo-5-methoxyphenyl, (2,4)-dibromophenyl, (2,4)-dimethylphenyl, 2-fluoro-4-trifluoromethylphenyl, (2,5)-difluorophenyl, 2-fluoro-5-trifluoromethylphenyl, 5-fluoro-2-trifluoromethylphenyl, 5-chloro-2-trifluoromethylphenyl, 5-bromo-2-trifluoromethylphenyl, (2,5)-dimethoxyphenyl, (2,5)-bis-trifluoromethylphenyl, (2,5)-dichlorophenyl, (2,5)-dibromophenyl, 2-methoxy-5-nitrophenyl, 2-fluoro-6-trifluoro-methylphenyl, (2,6)-dimethoxyphenyl, (2,6)-dimethylphenyl, (2,6)-dichlorophenyl, 2-chloro-6-fluorophenyl, 2-bromo-6-chlorophenyl, 2-bromo-6-fluorophenyl, (2,6)-difluorophenyl, (2,6)-difluoro-3-methylphenyl, (2,6)-dibromophenyl, (2,6)-dichlorophenyl, 3-chloro-2-fluorophenyl, 3-chloro-5-methylphenyl, (3,4)-dichlorophenyl, (3,4)-dimethylphenyl, 3-methyl-4-methoxyphenyl, 4-chloro-3-nitrophenyl, (3,4)-dimethoxyphenyl, 4-fluoro-3-trifluoromethylphenyl, 3-fluoro-4-trifluoromethylphenyl, (3,4)-difluorophenyl, 3-cyano-4-fluorophenyl, 3-cyano-4-methylphenyl, 3-cyano-4-methoxyphenyl, 3-bromo-4-fluorophenyl, 3-bromo-4-methylphenyl, 3-bromo-4-methoxyphenyl, 4-chloro-2-fluorophenyl, 4-chloro-3-trifluoromethyl, 4-bromo-3-methylphenyl, 4-bromo-5-methylphenyl, 3-chloro-4-fluorophenyl, 4-fluoro-3-nitrophenyl, 4-bromo-3-nitrophenyl, (3,4)-dibromophenyl, 4-chloro-3-methylphenyl, 4-bromo-3-methylphenyl, 4-fluoro-3-methylphenyl, 3-fluoro-4-methylphenyl, 3-fluoro-5-methylphenyl, 2-fluoro-3-methylphenyl, 4-methyl-3-nitrophenyl, (3,5)-dimethoxyphenyl, (3,5)-dimethylphenyl, (3,5)-bis-trifluoromethylphenyl, (3,5)-difluorophenyl, (3,5)-dinitrophenyl, (3,5)-dichlorophenyl, 3-fluoro-5-trifluoromethylphenyl, 5-fluoro-3-trifluoro-methylphenyl, (3,5)-dibromophenyl, 5-chloro-4-fluorophenyl, 5-chloro-4-fluorophenyl, 5-bromo-4-methylphenyl, (2,3,4)-trifluorophenyl, (2,3,4)-trichlorophenyl, (2,3,6)-trifluorophenyl, 5-chloro-2-methoxyphenyl, (2,3)-difluoro-4-methyl, (2,4,5)-trifluorophenyl, (2,4,5)-trichlorophenyl, (2,4)-dichloro-5-fluorophenyl, (2,4,6)-trichlorophenyl, (2,4,6)-trimethylphenyl, (2,4,6)-trifluorophenyl, (2,4,6)-trimethoxyphenyl, (3,4,5)-trimethoxyphenyl, (2,3,4,5)-tetrafluorophenyl, 4-methoxy-(2,3,6)-trimethylphenyl, 4-methoxy-(2,3,6)-trimethylphenyl, 4-chloro-2,5-dimethylphenyl, 2-chloro-6-fluoro-3-methylphenyl, 6-chloro-2-fluoro-3-methyl, (2,4,6)-trimethylphenyl and (2,3,4,5,6)-pentafluorophenyl.

In the context of the present invention, examples of a substituted heteroaryl are 3-methylpyrid-2-yl, 4-methylpyrid-2-yl, 5-methylpyrid-2-yl, 6-methylpyrid-2-yl, 2-methylpyrid-3-yl, 4-methylpyrid-3-yl, 5-methylpyrid-3-yl, 6-methylpyrid-3-yl, 2-methylpyrid-4-yl, 3-methylpyrid-4-yl, 3-fluoropyrid-2-yl, 4-fluoropyrid-2-yl, 5-fluoropyrid-2-yl, 6-fluoropyrid-2-yl, 3-chloropyrid-2-yl, 4-chloropyrid-2-yl, 5-chloropyrid-2-yl, 6-chloropyrid-2-yl, 3-trifluoromethylpyrid-2-yl, 4-trifluoromethylpyrid-2-yl, 5-trifluoromethylpyrid-2-yl, 6-trifluoromethylpyrid-2-yl, 3-methoxypyrid-2-yl, 4-methoxypyrid-2-yl, 5-methoxypyrid-2-yl, 6-methoxypyrid-2-yl, 4-methylthiazol-2-yl, 5-methylthiazol-2-yl, 4-trifluoromethylthiazol-2-yl, 5-trifluoromethylthiazol-2-yl, 4-chlorothiazol-2-yl, 5-chlorothiazol-2-yl, 4-bromothiazol-2-yl, 5-bromothiazol-2-yl, 4-fluorothiazol-2-yl, 5-fluorothiazol-2-yl, 4-cyanothiazol-2-yl, 5-cyanothiazol-2-yl, 4-methoxythiazol-2-yl, 5-methoxythiazol-2-yl, 4-methyloxazol-2-yl, 5-methyloxazol-2-yl, 4-trifluoromethyloxazol-2-yl, 5-trifluoromethyloxazol-2-yl, 4-chlorooxazol-2-yl, 5-chlorooxazol-2-yl, 4-bromooxazol-2-yl, 5-bromooxazol-2-yl, 4-fluorooxazol-2-yl, 5-fluorooxazol-2-yl, 4-cyanooxazol-2-yl, 5-cyanooxazol-2-yl, 4-methoxyoxazol-2-yl, 5-methoxyoxazol-2-yl, 2-methyl-(1,2,4)-thiadiazol-5-yl, 2-trifluoromethyl-(1,2,4)-thiadiazolyl-5-yl, 2-chloro-(1,2,4)-thiadiazol-5-yl, 2-fluoro-(1,2,4)-thiadiazol-5-yl, 2-methoxy-(1,2,4)-thiadiazol-5-yl, 2-cyano-(1,2,4)-thiadiazol-5-yl, 2-methyl-(1,2,4)-oxadiazol-5-yl, 2-trifluoromethyl-(1,2,4)-oxadiazol-5-yl, 2-chloro-(1,2,4)-oxadiazol-5-yl, 2-fluoro-(1,2,4)-oxadiazol-5-yl, 2-methoxy-(1,2,4)-oxadiazol-5-yl and 2-cyano-(1,2,4)-oxadiazol-5-yl.

### substituted

In the context of the present invention, the term "substituted" for any one of the alkylene; heteroalkylene; alkenylene; heteroalkenylene; cycloalkylene; heterocycloalkylene; cycloalkenylene; heterocycloalkenylen; arylene and heteroarylene disclosed herein refers to mono- or polysubstituted alkylene; heteroalkylene; alkenylene; heteroalkenylene; cycloalkylene; heterocycloalkylene; cycloalkenylene; heterocycloalkenylen; arylene and heteroarylene, respectively, they may preferably be substituted with 1, 2, 3, 4 or 5, more preferably with 1, 2 or 3 substituents. Examples of substituents are -NHR¹, with R¹ is -C(Rᵤ)(Rᵥ)(R_{w})-, wherein Rᵤ, Rᵥ and R_{w} independently of each other are selected from the group consisting of hydrogen, linear or branched, substituted or unsubstituted C₁-C₃₀ alkyl, linear or branched, substituted or unsubstituted C₂-C₃₀ alkenyl, substituted or unsubstituted, linear or branched 2- to 30-membered heteroalkyl, substituted or unsubstituted, linear or branched 3- to 30-membered heteroalkenyl, substituted or unsubstituted C₅-C₃₀ cycloalkyl, substituted or unsubstituted C₅-C₃₀ cycloalkenyl, substituted or unsubstituted 5- to 30-membered heterocycloalkyl, substituted or unsubstituted 5- to 30-membered heterocycloalkenyl, substituted or unsubstituted C₆-C₃₀ aryl, substituted or unsubstituted 5- to 30-membered heteroaryl, substituted or unsubstituted C₁-C₁₀ alkylene C₅-C₃₀ cycloalkyl, substituted or unsubstituted C₁-C₁₀ alkylene C₅-C₃₀ cycloalkenyl, substituted or unsubstituted C₁-C₁₀ alkylene 5- to 30-membered heterocycloalkyl, substituted or unsubstituted C₁-C₁₀ alkylene 5- to 30-membered heterocycloalkenyl, substituted or unsubstituted C₁-C₁₀ alkylene C₆-C₃₀ aryl and substituted or unsubstituted C₁-C₁₀ alkylene 5- to 30-membered heteroaryl. More preferably, Rᵤ, Rᵥ and R_{w} independently of each other are selected from the group consisting of hydrogen, linear or branched, substituted or unsubstituted C₁-C₃₀ alkyl. More preferably, Rᵤ, Rᵥ and R_{w} independently of each other are selected from the group consisting of hydrogen, methyl, ethyl, propyl, iso-propyl, butyl, pentyl, hexyl, octyl, dodecyl, sec-butyl, tert-butyl, sec-isopentyl, 2-pentyl, 2-methyl-4-pentyl, 3-pentyl, 2-methyl-pentyl, 2,6-dimethyl-4-heptyl, 3-pinanyl-methyl, cyclopentyl, cyclohexyl, dicyclohexylmethyl, cyclohexylmethyl, cyclododecyl, phenyl, benzyl, and cyclohexyl(phenyl)methyl, preferably selected from the group consisting of hydrogen, methyl, and ethyl, more preferably selected from the group consisting of hydrogen, methyl and ethyl. Alternatively, preferably, in -NHR^{1,} R¹ is -C(Rᵤ)(Rᵥ)(R_{w}), wherein C and Rᵤ form a substituted or unsubstituted C₆-C₃₀ arylene, and both Rᵥ and R_{w} are none. For example, -NHR¹ can be -NH-phenyl.

The present invention is further illustrated by the following reference examples, comparative examples, and examples.

### Examples

### 1. Chemicals

### Isocyanates

- pMDI: polymeric methylene diphenylisocyanate, average functionality of 2.53
- TDI: mixture comprising about 80 weight-% of toluene-2,4-diisocyanate and about 20 weight-% of toluene-2,6-diisocyanate

### Amine-alcohols*

2-(Isopropylamino)ethanol
N-(2-Hydroxyethyl)-anilin
4-Hydroxypiperidin
ethanolamine

### Solvents

- THF: tetrahydrofurane, anhydrous

### Catalysts

- DBTDL: dibutyltin dilaurate

*Amine-alcohol" is used as abbreviation for a compound comprising a hydroxyl group and a secondary amino group of formula (I).

### 2. Methods

### DSC

Differential scanning calorimetry (DSC) was used to determine the reaction enthalpy of the exothermic reaction according to ASTM D 3418 (2021)using a heating rate of 5 K/min.

### Melting temperature

The temperature at which the polymer started to melt was determined by visual inspection when a specific pressure was applied and the temperature was raised from 25 °C stepwise by 10 °C per step. For example, for a white solid material, the start of the melting was visibly recognizable in that the solid started becoming transparent/opaque.

### TGA

Thermogravimetric Analysis (TGA) spectra for measuring the mass of a polymer sample over time via temperature changes were obtained according to ASTM E1131 (Apr. 2020), ISO 11358 (Oct. 2014) under N₂ atmosphere in gold crucibles.

### Method for thermal reshaping

The polymer obtained according to the examples, comparative examples was transferred to a hot press. Pressure of 20 kN was applied and the temperature was adjusted stepwise in 10°C steps to a temperature at the melting temperature of the respective polymer and kept at this temperature for at least 5 minutes.

### Example 1a: Synthesis of polyurea/urethan polymer based on 2-(isopropylamino)ethanol and pMDI.

pMDI (16.25 g, f= 2.53) and anhydrous THF (200 g) were charged in a flask under N₂ atmosphere. 2-(isopropylamino)ethanol having a purity of 70 % (8.99 g) in anhydrous THF (50 g) and 0.03 g DBTDL having a purity of 95 % were slowly added at 25°C to form polyurea/urethane. After the addition was terminated, the reaction mixture was heated to 50-55°C and kept in this temperature range until the polymerization was complete, which was confirmed by disappearance of the NCO band in the range of from 2300 cm⁻¹ bis 2250 cm⁻¹ in the Infrared (IR) spectrum. The THF was evaporated under reduced pressure. The obtained residual material was cooled and crushed, the obtained solid was dried at elevated temperatures under reduced pressure to eliminate the residual THF. The product was obtained as a slightly yellowish solid in quantitative yields.

The solid polymer obtained was transferred to a hot press. When applying 20 kN of pressure at 100°C for at least 5 minutes the polymer melted and was reshaped, after cooling the polymer was obtained as a solid cookie-shaped plate.

### Example 1b: Synthesis of polyurea/urethan polymer based on 2-(isopropylamino)ethanol and TDI

At 25°C, TDI (8.71 g) and anhydrous THF (200 g) were charged in a flask under N₂ atmosphere. 2-(isopropylamino)ethanol with purity of 70 % (7.37 g) in anhydrous THF (50 g) and 0.03 g DBTDL with purity of 95 % was slowly added to form polyurea/urethane. After the addition was terminated the reaction mixture was heated to 50-55°C and kept in this temperature range until the polymerization was complete, which was confirmed by disappearance of the NCO band in IR. The THF was evaporated under reduced pressure. The obtained material was cooled and crushed, the obtained solid was dried at elevated temperatures under reduced pressure to eliminate the residual THF. The product was obtained as a white solid in quantitative yields.

The solid polymer obtained was transferred to a hot press. When applying 20 kN of pressure at 100°C for at least 5 minutes the polymer melted and was reshaped, after cooling the polymer was obtained as a solid cookie-shaped plate.

### Example 2a: Synthesis of polyurea/urethan polymer based on N-(2-hydroxyethyl)-anilin and pMDI

At 25°C, pMDI (16.25 g, f= 2.53) and anhydrous THF (200 g) were charged in a flask under N₂ atmosphere. N-(2-hydroxyethyl)-anilin with purity of 98 % (8.54 g) in anhydrous THF (50 g) and 0.03 g DBTDL with purity of 95% were slowly added to form polyurea/urethane. After the addition was terminated the reaction mixture was heated to 50-55°C and kept in this temperature range. After several days the NCO band was still visible in the IR. 5.16 g of N-(2-hydroxyethyl)-aniline were added (ratio NCO : XH 1 : 1.6) until the polymerization was complete, which was confirmed by disappearance of the NCO band in IR. The THF was evaporated under reduced pressure. The obtained material was cooled and crushed, the obtained solid was dried at elevated temperatures under reduced pressure to eliminate the residual THF. The product was obtained as a slightly yellowish solid in quantitative yields.

The solid polymer obtained was transferred to a hot press. When applying 20 kN of pressure at 80°C for at least 5 minutes the polymer melted and was reshaped, after cooling the polymer was obtained as a solid cookie-shaped plate.

### Example 2b: Synthesis of polyurea/urethan polymer based on N-(2-hydroxyethyl)-anilin and TDI

At 25°C, TDI (8.71 g) and anhydrous THF (200 g) were charged in a flask under N₂ atmosphere. N-(2-hydroxyethyl)-anilin with purity of 98% (7.00 g) in anhydrous THF (50 g) and 0.03 g DBTDL with purity of 95% were slowly added to form polyurea/urethane. After the addition was complete the reaction mixture was heated to 50-55°C and kept in this temperature range until the polymerization was complete, which was confirmed by disappearance of the NCO band in IR. The THF was evaporated under reduced pressure. The obtained material was cooled and crushed, the obtained solid was dried at elevated temperatures under reduced pressure to eliminate the residual THF. The product was obtained as a white solid in quantitative yields.

The solid polymer obtained was transferred to a hot press. When applying 20 kN of pressure at 100°C for at least 5 minutes the polymer melted and was reshaped, after cooling the polymer was obtained as a solid cookie-shaped plate.

### Example 3a: Synthesis of polyurea/urethan polymer based on 4-hydroxypiperidin and pMDI

At 25°C, 4-hydroxypiperidin with purity of 98 % (6.19 g) in anhydrous THF (130 g) were charged in a flask under N₂ atmosphere. pMDI (10.11 g, f= 2.53) in anhydrous THF (35 g) (ratio NCO : XH 1 : 1.6) were added slowly. 0.02 g DBTDL with purity of 95% was added to form polyurea/urethane. After the addition was complete the reaction mixture was heated to 50-55°C and kept in this temperature range until the polymerization was complete, which was confirmed by disappearance of the NCO band in IR. The THF was evaporated under reduced pressure. The obtained material was cooled and crushed, the obtained solid was dried at elevated temperatures under reduced pressure to eliminate the residual THF. The product was obtained as a slightly yellowish solid in quantitative yields.

The solid polymer obtained was transferred to a hot press. When applying 20 kN of pressure at 90°C for at least 5 minutes the polymer melted and was reshaped, after cooling the polymer was obtained as a solid cookie-shaped plate.

### Example 3b: Synthesis of polyurea/urethan polymer based on 4-hydroxypiperidin and TDI

AT 25°C, 4-hydroxypiperidin with purity of 98 % (5.16 g) in anhydrous THF (200 g) were charged in a flask under N₂ atmosphere. TDI (8.71 g) in anhydrous THF (40 g) (ratio NCO : XH 1 : 1) were added slowly. 0.03 g DBTDL with purity of 95 % was added to form polyurea/urethane. After the addition was complete the reaction mixture was heated to 50-55°C and kept in this temperature range until the polymerization was complete, which was confirmed by disappearance of the NCO band in IR. The THF was evaporated under reduced pressure. The obtained material was cooled and crushed, the obtained solid was dried at elevated temperatures under reduced pressure to eliminate the residual THF. The product was obtained as a slightly yellowish solid in quantitative yields.

Again, the solid polymer obtained was transferred to a hot press. When applying 20 kN of pressure at 110°C for at least 5 minutes the polymer melted partly, after cooling the polymer was obtained as a solid cookie-shaped plate.

### Example 4a: Synthesis of polyurea/urethan polymer based on 2-(Isopropylamino)ethanol and pMDI (catalyst free synthesis)

At 25 °C, polymeric methylene diphenylisocyanate (pMDI) (16.25 g, f= 2.53) and anhydrous THF (200 g) were charged in a flask under N₂ atmosphere. 2-(isopropylamino)ethanol having a purity of 70% (8.99 g) in anhydrous THF (50 g) was slowly added to form polyurea/urethane (ratio NCO : XH 1 : 1). After the addition was terminated the reaction mixture was heated to 50-55 °C until the polymerization was complete, which was confirmed by disappearance of the NCO band in IR. The THF was evaporated under reduced pressure. The obtained material was cooled and crushed, the obtained solid was dried at elevated temperatures under reduced pressure to eliminate the residual THF. The product was obtained as a slightly yellowish solid in quantitative yields.

The solid polymer obtained was transferred to a hot press. When applying 20 kN of pressure at 100 °C for at least 5 minutes the polymer melted and was reshaped, after cooling the polymer was obtained as a solid cookie-shaped plate.

### Example 4b: Synthesis of polyurea/urethan polymer based on 2-(Isopropylamino)ethanol and TDI (catalyst free synthesis)

AT 25 °C, toluene diisocyanate (TDI) (8.71 g) and anhydrous THF (200 g) were charged in a flask under N₂ atmosphere. 2-(isopropylamino)ethanol having a purity of 70 % (7.37 g) in anhydrous THF (50 g) was slowly added to form polyurea/urethane (ratio NCO : XH 1 : 1). After the addition was terminated the reaction mixture was heated to 50-55 °C until the polymerization was complete, which was confirmed by disappearance of the NCO band in IR. The THF was evaporated under reduced pressure. The obtained material was cooled and crushed, the obtained solid was dried at elevated temperatures under reduced pressure to eliminate the residual THF. The product was obtained as a white solid in quantitative yields.

The solid polymer obtained was transferred to a hot press. When applying 20 kN of pressure at 100 °C for at least 5 minutes the polymer melted and was reshaped, after cooling the polymer was obtained as a solid cookie-shaped plate.

### Comparative Example 1a: Synthesis of polyurea/urethan polymer based on ethanolamine and pMDI

At 25°C, pMDI (16.25 g, f= 2.53) and anhydrous THF (200 g) were charged in a flask under N₂ atmosphere. Ethanolamine 99% (3.76 g) in anhydrous THF (50 g) and 0.03 g DBTDL 95% was slowly added to form polyurea/urethane. After the addition was complete the reaction mixture was heated to 50-55°C and kept in this temperature range until the polymerization was complete, which was confirmed by disappearance of the NCO band in IR. The THF was evaporated under reduced pressure. The obtained material was cooled and crushed, the obtained solid was dried at elevated temperatures under reduced pressure to eliminate the residual THF. The product was obtained as a slightly yellowish solid in quantitative yields.

The solid polymer obtained was transferred to a hot press. When applying 20 kN of pressure at 100, 110, 120, 130, 140 and 150°C for at least 5 minutes the did not melt but stayed brittle and opaque.

### Comparative Example 1b: Synthesis of polyurea/urethan polymer based on ethanolamine and TDI

At 25 °C, TDI (8.71 g) and anhydrous THF (200 g) were charged in a flask under N₂ atmosphere. Ethanolamine with purity 99 % (3.08 g) in anhydrous THF (50 g) and 0.03 g DBTDL with purity of 95 % was slowly added to form polyurea/urethane. After the addition was complete the reaction mixture was heated to 50-55°C and kept in this temperature range. However, the NCO band of the solid product was still visible after several days of stirring. The reaction was discarded.

An overview of the experiments conducted and the results achieved is shown below in Table 1:

**Table 1**

| Overview Examples and Comparative Examples | | | | | |
|---|---|---|---|---|---|
| Example | Amine-alcohol | Diisocyanate | Molar Ratio NCO : XH (XH = NH + OH) | NCO Band disappeared? | Melting temperature at 20 kN, 5 min [°C] |
| 1a | 2-(Isopropylamino)ethanol | pMDI | 1:1 | yes | 100 |
| 1b | 2-(Isopropylamino)ethanol | TDI | 1 : 1 | yes | 100 |
| 2a | N-(2-Hydroxyethyl)-anilin | pMDI | 1: 1.6 | Yes, with excess of amine-alcohol | 80 |
| 2b | N-(2-Hydroxyethyl)-anilin | TDI | 1:1 | yes | 100 |
| 3a | 4-Hydroxypiperidin | pMDI | 1 : 1.6 | Yes, with excess of amine-alcohol | 90 |
| 3b | 4-Hydroxypiperidin | TDI | 1 : 1 | yes | 110 (partly) |
| 4a | 2-(Isopropylamino)ethanol | pMDI | 1:1 | yes | 100 |
| 4b | 2-(Isopropylamino)ethanol | TDI | 1 : 1 | yes | 80 |
| Comparative Example 1a | Ethanolamine | pMDI | 1 : 1 | yes | Up to 150°C no melting |
| Comparative Example 1b | Ethanolamine | TDI | 1 : 1 | No | Could not be determined since no polymer was formed |

### Cited Literature

WO 2021/122472 A1
WO 2022/189242 A1

## Claims

1. A poly(urea-urethane) polymer, obtained or obtainable by reacting
(i) at least one isocyanate;
(ii) at least one compound comprising a hydroxyl group and a secondary amino group having the following formula (I) 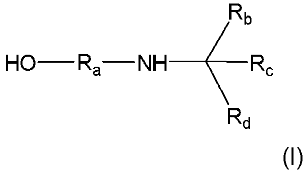
wherein -Rₐ- is selected from the group consisting of -Z₁-, -Z₂-, -Z₃-, -Z₄-, -Z₅-, -Z₆-, -Z₇-,-Z₈-, -Z₉-, -Z₁₀-, -Z₁₂-, -Z₁-Z₅, -Z₅-Z₁-Z₅, Z₁-Z₆-, Z₁-Z₇-, -Z₁-Z₈-, - Z₁-Z₉-, -Z₉-Z₁-Z₉-, -Z₁-Z₁₀-, -Z₃-Z₅-, -Z₃-Z₆-, -Z₃-Z₇-, -Z₃-Z₈-, -Z₃-Z₉-, -Z₃-Z₁₀-, -Z₁-Z₅-Z₁-, -Z₁-Z₉-Z₁-, -Z₁-Z₁₂-, and -Z₁-Z₁₁-Z₁- ; wherein
-Z₁- is a substituted or unsubstituted, linear or branched C₁-C₃₀ alkylene;
-Z₂- is a substituted or unsubstituted, linear or branched 2- to 300,000-membered heteroalkylene;
-Z₃- is a substituted or unsubstituted, linear or branched C₂-C₃₀ alkenylene;
-Z₄- is a substituted or unsubstituted, linear or branched 3- to 30-membered heteroalkenylene;
-Z₅- is a substituted or unsubstituted C₅-C₃₀ cycloalkylene;
-Z₆- is a substituted or unsubstituted 5- to 30-membered heterocycloalkylene;
-Z₇- is a substituted or unsubstituted C₅-C₃₀ cycloalkenylene;
-Z₈- is a substituted or unsubstituted 5- to 30-membered heterocycloalkenylene;
-Z₉- is a substituted or unsubstituted C₆-C₃₀ arylene, preferably with one substituent selected from hydrogen atom, -NHR or -OR, wherein R is selected from the group consisting of H and substituted or unsubstituted, linear or branched C₁-C₁₀ alkyl;
-Z₁₀- is a substituted or unsubstituted 5- to 30-membered heteroarylene;
-Z₁₁- is-N(R_{c'})-;
-Z₁₂- is a substituted or unsubstituted 5- to 30-membered heterocycloalkyl(ene), wherein at least one of the one or more heteroatoms of Z₁₂ is from NH;
wherein
(A) R_{b}, R_{c}, R_{d} and optionally R_{c'} independently of each other are selected from the group consisting of hydrogen, linear or branched, substituted or unsubstituted C₁-C₃₀ alkyl, linear or branched, substituted or unsubstituted C₂-C₃₀ alkenyl, substituted or unsubstituted, linear or branched 2- to 30-membered heteroalkyl, substituted or unsubstituted, linear or branched 3- to 30-membered heteroalkenyl, substituted or unsubstituted C₅-C₃₀ cycloalkyl, substituted or unsubstituted C₅-C₃₀ cycloalkenyl, substituted or unsubstituted 5- to 30-membered heterocycloalkyl, substituted or unsubstituted 5- to 30-membered heterocycloalkenyl, substituted or unsubstituted C₆-C₃₀ aryl, substituted or unsubstituted 5- to 30-membered heteroaryl, substituted or unsubstituted C₁-C₁₀ alkylene C₅-C₃₀ cycloalkyl, substituted or unsubstituted C₁-C₁₀ alkylene C₅-C₃₀ cycloalkenyl, substituted or unsubstituted C₁-C₁₀ alkylene 5- to 30-membered heterocycloalkyl, substituted or unsubstituted C₁-C₁₀ alkylene 5- to 30-membered heterocycloalkenyl, substituted or unsubstituted C₁-C₁₀ alkylene C₆-C₃₀ aryl and substituted or unsubstituted C₁-C₁₀ alkylene 5- to 30-membered heteroaryl,
or
(B) the C atom bearing R_{b}, R_{c}, R_{d} and R_{b} form a substituted or unsubstituted C₆-C₃₀ aryl, or a substituted or unsubstituted 5- to 30-membered heteroaryl, and both R_{c} and R_{d} are none.

2. The poly(urea-urethane) polymer of claim 1, wherein R_{b}, R_{c}, and R_{d} independently of each other are selected from the group consisting of hydrogen, methyl, ethyl, propyl, iso-propyl, butyl, pentyl, hexyl, octyl, dodecyl, sec-butyl, tert-butyl, sec-isopentyl, 2-pentyl, 2-methyl-4-pentyl, 3-pentyl, 2-methyl-pentyl, 2,6-dimethyl-4-heptyl, 3-pinanyl-methyl, cyclopentyl, cyclohexyl, dicyclohexylmethyl, cyclohexylmethyl, cyclododecyl, phenyl, benzyl, cyclohexyl(phenyl)methyl, and -C(OH)H-Rₖ, wherein Rₖ is selected from the group consisting of hydrogen, linear or branched, substituted or unsubstituted C₁-C₃₀ alkyl, linear or branched, substituted or unsubstituted C₂-C₃₀ alkenyl, substituted or unsubstituted, linear or branched 2- to 30-membered heteroalkyl, substituted or unsubstituted, linear or branched 3- to 30-membered heteroalkenyl, substituted or unsubstituted C₅-C₃₀ cycloalkyl, substituted or unsubstituted C₅-C₃₀ cycloalkenyl, substituted or unsubstituted 5- to 30-membered heterocycloalkyl, substituted or unsubstituted 5- to 30-membered heterocycloalkenyl, substituted or unsubstituted C₆-C₃₀ aryl, substituted or unsubstituted 5- to 30-membered heteroaryl, substituted or unsubstituted C₁-C₁₀ alkylene C₅-C₃₀ cycloalkyl, substituted or unsubstituted C₁-C₁₀ alkylene C₅-C₃₀ cycloalkenyl, substituted or unsubstituted C₁-C₁₀ alkylene 5- to 30-membered heterocycloalkyl, substituted or unsubstituted C₁-C₁₀ alkylene 5- to 30-membered heterocycloalkenyl, substituted or unsubstituted C₁-C₁₀ alkylene C₆-C₃₀ aryl and substituted or unsubstituted C₁-C₁₀ alkylene 5- to 30-membered heteroaryl.

3. The poly(urea-urethane) polymer of claim 1 or 2, wherein R_{b} is a hydrogen atom and R_{c}, R_{d} are independently of each other are selected from the group consisting of methyl, ethyl, propyl, iso-propyl, butyl, pentyl, hexyl, octyl, dodecyl, sec-butyl, tert-butyl, sec-isopentyl, 2-pentyl, 2-methyl-4-pentyl, 3-pentyl, 2-methyl-pentyl, 2,6-dimethyl-4-heptyl, 3-pinanyl-methyl, cyclopentyl, cyclohexyl, dicyclohexylmethyl, cyclohexylmethyl, cyclododecyl, phenyl, benzyl, cyclohexyl(phenyl)methyl, and -C(OH)H-Rₖ.

4. The poly(urea-urethane) polymer of any one of claims 1 to 3, wherein R_{b} is a hydrogen atom and R_{c}, R_{d} are independently of each other are selected from the group consisting of methyl, ethyl, propyl, iso-propyl, butyl, pentyl, hexyl, octyl, dodecyl, sec-butyl, tert-butyl, sec-isopentyl, 2-pentyl, 2-methyl-4-pentyl, 3-pentyl, 2-methyl-pentyl, 2,6-dimethyl-4-heptyl, and 3-pinanyl-methyl.

5. The poly(urea-urethane) polymer of claim 1, wherein the C atom bearing R_{b}, R_{c}, R_{d} and R_{b} form a substituted or unsubstituted C₆-C₃₀ aryl, and both R_{c} and R_{d} are none, wherein the C₆-C₃₀ aryl is a C₆-C₁₂ aryl comprising one or more aromatic ring system(s), which are, in case of two or more rings systems, conjugated or isolated, wherein the C₆-C₁₂ aryl is preferably selected from the group consisting of phenyl, naphthyl, biphenyl, fluorenyl, and indyl.

6. The poly(urea-urethane) polymer of claim 1 or 5, wherein the C₆-C₃₀ aryl is unsubstituted or has at least one substituent selected from the group consisting of branched or straight C1 to C10 alkyl, wherein said at least one substituent is preferably not situated at a C atom of the C₆-C₃₀ aryl adjacent to the C atom forming the bond to NH.

7. The poly(urea-urethane) polymer of any one of claims 1 or 5 to 6, wherein the C₆-C₃₀ aryl is a phenyl ring, which preferably has hydrogen atoms at the C atoms adjacent to the C atom forming the bond to NH (ortho positions) and which preferably has at least one substituent at the meta and/or para position(s), which is selected from the group consisting of hydrogen atom and branched or straight C₁-C₁₀ alkyl group, more preferably from the group consisting of hydrogen atom and branched or straight C₁-C₅ alkyl group.

8. The poly(urea-urethane) polymer of any one of claims 1 to 7, wherein Rₐ is a substituted or unsubstituted, linear or branched C₁-C₃₀ alkylene, preferably a substituted or unsubstituted, linear C₁-C₃₀ alkylene, more preferably a unsubstituted linear C₁-C₁₀ alkylene.

9. The poly(urea-urethane) polymer of any one of claims 1 to 7, wherein Rₐ is -Z₁₂-, which is a substituted or unsubstituted 5- to 30-membered heterocycloalkyl(ene), wherein at least one of the one or more heteroatoms of Z₁₂ is from NH, Rₐ (Z₁₂) preferably being selected from the group consisting of aziridinyl(ene), pyrrolidinyl(ene), piperidinyl(ene), piperazinyl(ene), morpholinyl(ene), thiomorpholinyl(ene), tetrahydrofuranyl(ene), tetrahydrothiofuranyl(ene), tetrahydropyranyl(ene) and pyranyl(ene), more preferably piperidinyl(ene).

10. The poly(urea-urethane) polymer of any one of claims 1 to 9, which is **characterized in that** it is (re-)formable at a pressure in the range of from 10³ to 10⁷ Pa, preferably in the range of from 1.5 × 10³ to 10⁶ Pa; and/or, preferably and, at a temperature in the range of from 60 °C to a temperature below the decomposition temperature of the respective poly(urea-urethane) polymer, preferably in the range of from 60 to 200 °C, more preferably in the range of from 70 to 150 °C.

11. The poly(urea-urethane) polymer of any one of claims 1 to 10, wherein (i) and (ii) are reacted in the presence of less than 1 weight-%, preferably of less than 0.5 weight-%, more preferably of less than 0.1 weight-%, of a polyol, based on the sum of the weight-% of (i) and (ii) being 100 weight-%, more preferably (i) and (ii) are reacted in the absence of a polyol.

12. A method for preparing a poly(urea-urethane) polymer, preferably a poly(urea-urethane) polymer according to any one of claims 1 to 11, the method comprising:
(a) providing at least one isocyanate (i);
(b) providing at least one compound (ii) comprising a hydroxyl group and a secondary amino group having the following formula (I) 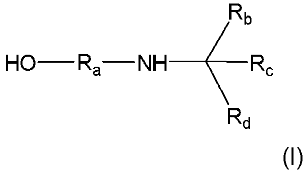
wherein -Rₐ- is selected from the group consisting of -Z₁-, -Z₂-, -Z₃-, -Z₄-, -Z₅-, - Z₆-, -Z₇-, -Z₇-, -Z₈-, -Z₉-, -Z₁₀-, -Z₁₂-, -Z₁-Z₅-, -Z₅-Z₁-Z₅-, -Z₁-Z₆-, -Z₁-Z₇-, -Z₁-Z₈-, -Z₁-Z₉-, -Z₉-Z₁-Z₉-, -Z₁-Z₁₀-, -Z₃-Z₅-, -Z₃-Z₆-, -Z₃-Z₇-, -Z₃-Z₈-, -Z₃-Z₉-, - Z₃-Z₁₀-, -Z₁-Z₅-Z₁-, -Z₁-Z₉-Z₁-, -Z₁-Z₁₂-and -Z₁-Z₁₁-Z₁- ; wherein
-Z₁- is a substituted or unsubstituted, linear or branched C₁-C₃₀ alkylene;
-Z₂- is a substituted or unsubstituted, linear or branched 2- to 300,000-membered heteroalkylene;
-Z₃- is a substituted or unsubstituted, linear or branched C₂-C₃₀ alkenylene;
-Z₄- is a substituted or unsubstituted, linear or branched 3- to 30-membered heteroalkenylene;
-Z₅- is a substituted or unsubstituted C₅-C₃₀ cycloalkylene;
-Z₆- is a substituted or unsubstituted 5- to 30-membered heterocycloalkylene;
-Z₇- is a substituted or unsubstituted C₅-C₃₀ cycloalkenylene;
-Z₈- is a substituted or unsubstituted 5- to 30-membered heterocycloalkenylen;
-Z₉- is a substituted or unsubstituted C₆-C₃₀ arylene, preferably with one substituent selected from hydrogen atom, -NHR or -OR, wherein is selected from the group consisting of H and substituted or unsubstituted, linear or branched C₁-C₁₀ alkyl;
-Z₁₀- is a substituted or unsubstituted 5- to 30-membered heteroarylene;
-Z₁₁- is-N(R_{c'})-;
-Z₁₂- is a substituted or unsubstituted 5- to 30-membered heterocycloalkylene, wherein at least one of the one or more heteroatoms of Z₁₂ is from NH (the NH located between Rₐ and the C atom bearing R_{b}, R_{c}, R_{d});
wherein
(A) R_{b}, R_{c}, R_{d} independently of each other are selected from the group consisting of hydrogen, linear or branched, substituted or unsubstituted C₁-C₃₀ alkyl, linear or branched, substituted or unsubstituted C₂-C₃₀ alkenyl, substituted or unsubstituted, linear or branched 2- to 30-membered heteroalkyl, substituted or unsubstituted, linear or branched 3- to 30-membered heteroalkenyl, substituted or unsubstituted C₅-C₃₀ cycloalkyl, substituted or unsubstituted C₅-C₃₀ cycloalkenyl, substituted or unsubstituted 5- to 30-membered heterocycloalkyl, substituted or unsubstituted 5- to 30-membered heterocycloalkenyl, substituted or unsubstituted C₆-C₃₀ aryl, substituted or unsubstituted 5- to 30-membered heteroaryl, substituted or unsubstituted C₁-C₁₀ alkylene C₅-C₃₀ cycloalkyl, substituted or unsubstituted C₁-C₁₀ alkylene C₅-C₃₀ cycloalkenyl, substituted or unsubstituted C₁-C₁₀ alkylene 5- to 30-membered heterocycloalkyl, substituted or unsubstituted C₁-C₁₀ alkylene 5- to 30-membered heterocycloalkenyl, substituted or unsubstituted C₁-C₁₀ alkylene C₆-C₃₀ aryl and substituted or unsubstituted C₁-C₁₀ alkylene 5- to 30-membered heteroaryl,
or
(B) the C atom bearing R_{b}, R_{c}, R_{d} and R_{b} form a substituted or unsubstituted C₆-C₃₀ aryl, or a substituted or unsubstituted C5-C30 heteroaryl and both R_{c} and R_{d} are none;
(c) reacting the at least one isocyanate (i) according to (a) and the at least one compound (ii) according to (b) with each other, thereby forming a poly(urea-urethane) polymer.

13. A process for (re)shaping a poly(urea-urethane) polymer, preferably a poly(urea-urethane) polymer according to any one of claims 1 to 11 or a poly(urea-urethane) polymer obtainable or obtained by a method according to claim 12 comprising: shaping the poly(urea-urethane) polymer, wherein shaping the polymer comprises
(x) applying pressure and heat to the poly(urea-urethane) polymer, thereby obtaining an at least partially melted poly(urea-urethane) polymer;
(x') shaping the at least partially melted poly(urea-urethane) polymer of (x), thereby obtaining a shaped body of the poly(urea-urethane) polymer.

14. An article comprising the poly(urea-urethane) polymer according to any one of claims 1 to 11, or of the poly(urea-urethane) polymer obtained or obtainable from the method of claim 12.

15. Use of the article of claim 14 or of the poly(urea-urethane) polymer according to any one of claims 1 to 11, or of the poly(urea-urethane) polymer obtained or obtainable from the method of claim 12 as a recyclable material, preferably for preparation of a coating, healable coating, recyclable rigid foam, recyclable flexible foam, part for the automotive industry, rigid foam insulation, durable elastomeric wheel, durable elastomeric tire, adhesive, surface coating, surface sealant, synthetic fiber, carpet underlay or a hard plastic part.
